# EUROPÄISCHE PATENTSCHRIFT

(11) **EP 0 718 374 B1**
(45) Veröffentlichungstag und Bekanntmachung des Hinweises auf die Patenterteilung: **06.03.2002**
(21) Anmeldenummer: 95810785.6
(22) Anmeldetag: 12.12.1995
(51) Int. Cl.: C09B 45/26, C09B 67/22

(54) **1:2-Chromkomplexfarbstoffe enthaltende Farbstoffmischungen und 1:2 Chromkomplexfarbstoffe**
1:2-Chromecomplex dyestuffs containing dyestuff-mixtures and 1:2-chromecomplex dyestuffs
Mélanges de colorants contenant des colorants complexes de chrome 1:2 et colorants complexes de chrome 1:2

(30) Priorität: 21.12.1994 CH 385394
(43) Veröffentlichungstag der Anmeldung: 26.06.1996
(73) Patentinhaber: Ciba Specialty Chemicals Holding Inc., 4057 Basel (CH)
(72) Erfinder: Lehmann, Urs, Dr., CH-4052 Basel (CH); Frick, Marcel, CH-4153 Reinach (CH)

(56) Entgegenhaltungen:
- EP-A- 0 082 117
- FR-A- 1 232 916
- FR-A- 1 585 581
- FR-A- 2 340 354

## Beschreibung

Die vorliegende Erfindung betrifft neue, 1:2-Chromkomplexfarbstoffe enthaltende Farbstoffmischungen, Verfahren zu deren Herstellung und deren Verwendung zum Färben oder Bedrucken von Fasermaterialien oder Leder.

Mischungen zweier 1:2-Chromkomplexfarbstoffe sind aus der FR-A-1 585 581 bekannt.

Gegenstand der Erfindung sind Farbstoffmischungen, welche dadurch gekennzeichnet sind, dass sie mindestens einen 1:2-Chromkomplexfarbstoff der Formel (1) 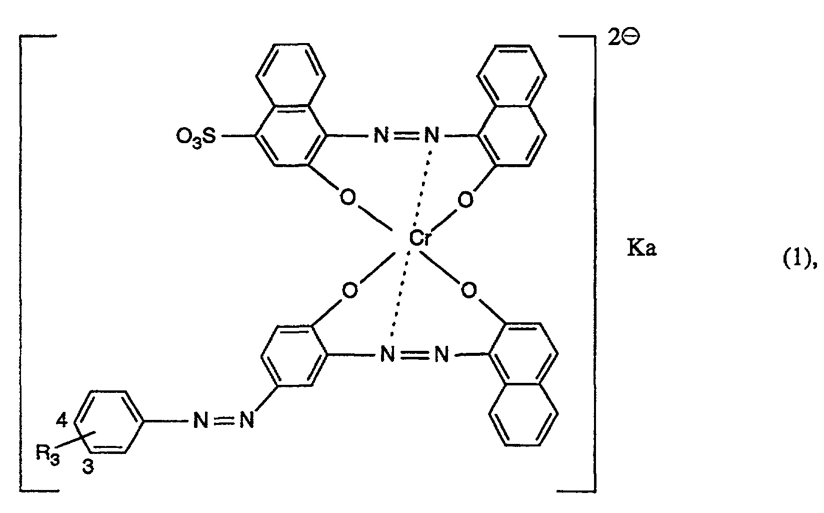 worin R₃ ein in der bezeichneten 4-Position gebundener C₁-C₄-Alkoxyrest und Ka ein Kation oder mehrere Kationen ist,
zusammen mit mindestens einem 1:2-Chrom- oder 1:2-Kobaltkomplexfarbstoff von zwei gleichen oder zwei voneinander verschiedenen Azoverbindungen aus der Gruppe der Verbindungen der Formeln (2), (3) und (4) 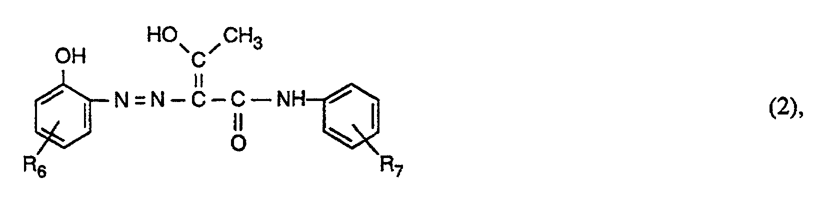 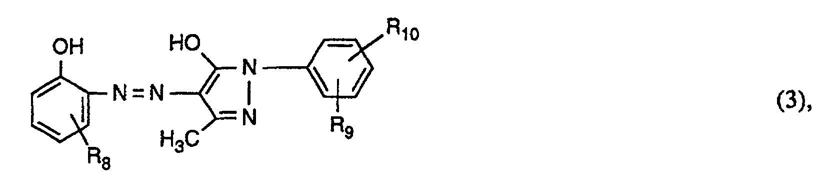 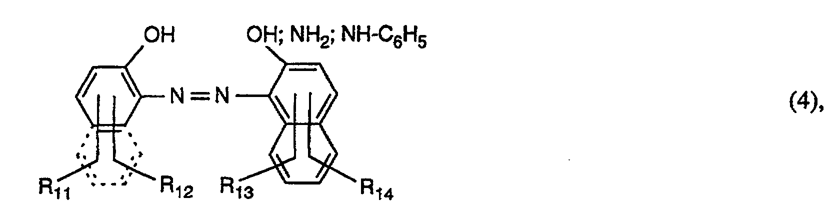 worin R₆, R₇, R₈, R₉, R₁₀, R₁₁, R₁₂, R₁₃ und R₁₄ unabhängig voneinander Wasserstoff, C₁-C₄-Alkyl, C₁-C₄-Alkoxy, C₂-C₄-Alkanoylamino, Halogen, Sulfo, Hydroxyl, Nitro, Sulfamoyl oder gegebenenfalls im Alkylteil durch Hydroxyl oder C₁-C₄-Alkoxy weitersubstituiertes N-C₁-C₄-Alkylsulfamoyl sind,
oder zusammen mit mindestens einem 1:2-Kobaltkomplexfarbstoff der Formazanverbindung der Formel (5) 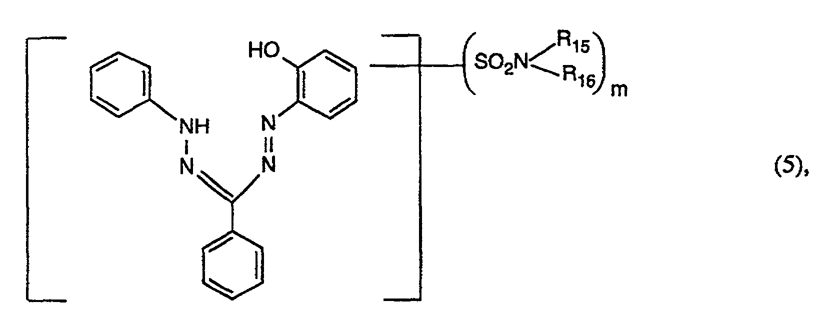 worin
R₁₅ und R₁₆ unabhängig voneinander Wasserstoff oder unsubstituiertes oder durch Hydroxyl oder C₁-C₄-Alkoxy substituiertes C₁-C₄-Alkyl sind,
m die Zahl 1, 2 oder 3 ist und
die Phenylreste der Verbindung der Formel (5) keine weiteren Substituenten enthalten oder durch C₁-C₄-Alkyl, C₁-C₄-Alkoxy, C₂-C₄-Alkanoylamino, C₁-C₄-Alkylsulfonyl, C₁-C₄-Hydroxyalkylsulfonyl, Halogen, Sulfo, Hydroxyl, Carboxyl oder Nitro weitersubstituiert sind,
oder zusammen mit mindestens einem Anthrachinonfarbstoff aus der Gruppe der Verbindungen der Formeln

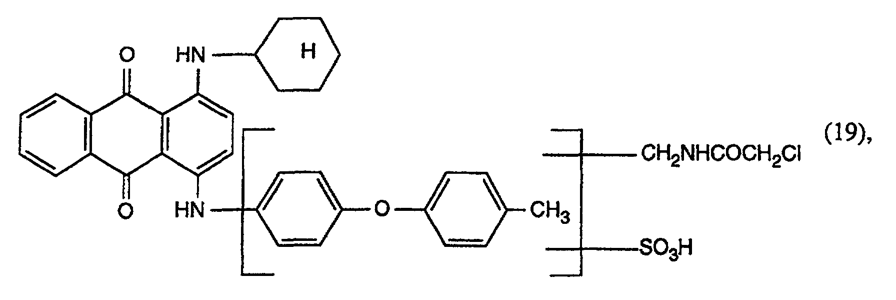

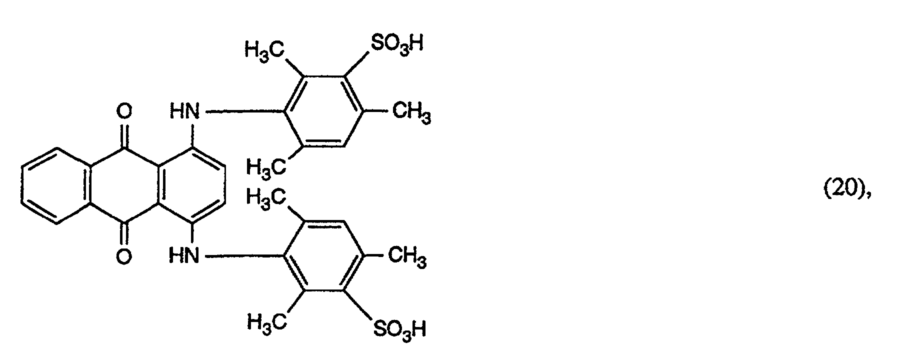

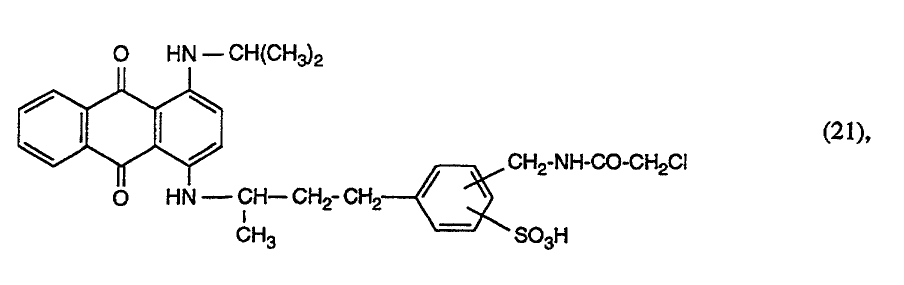

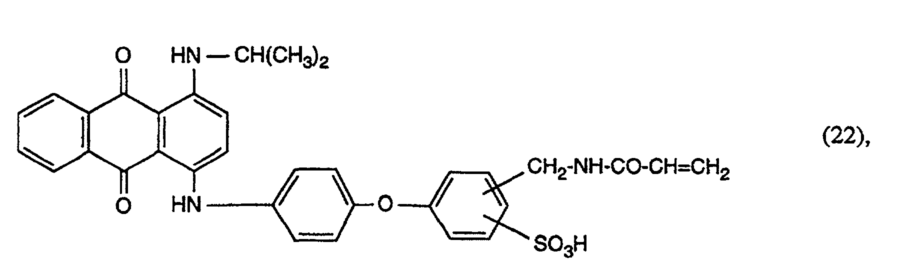

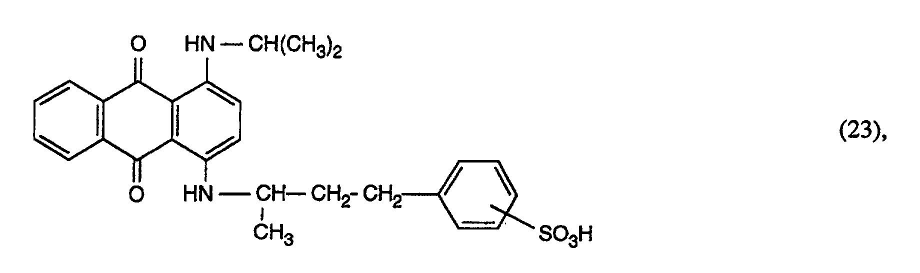

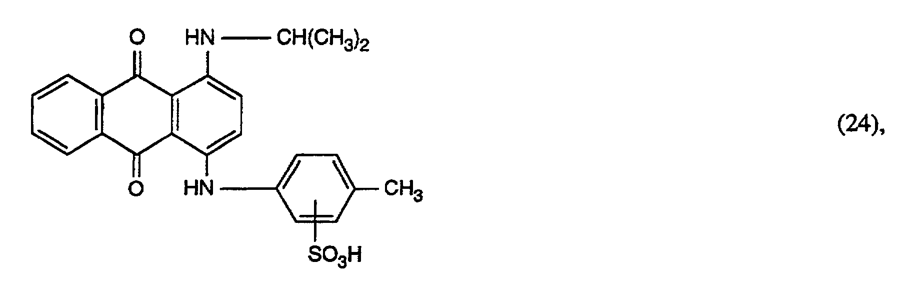

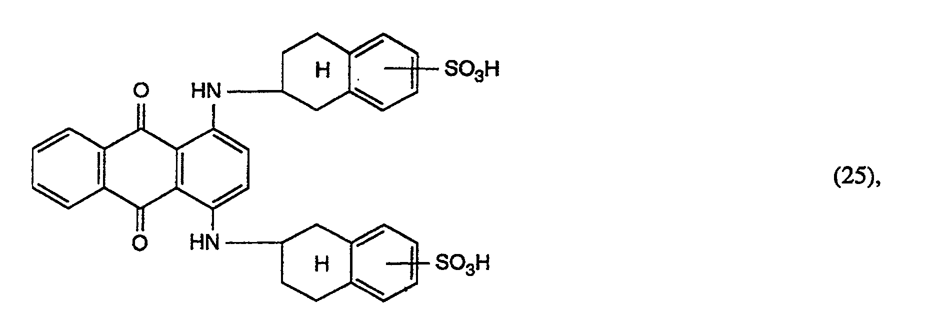

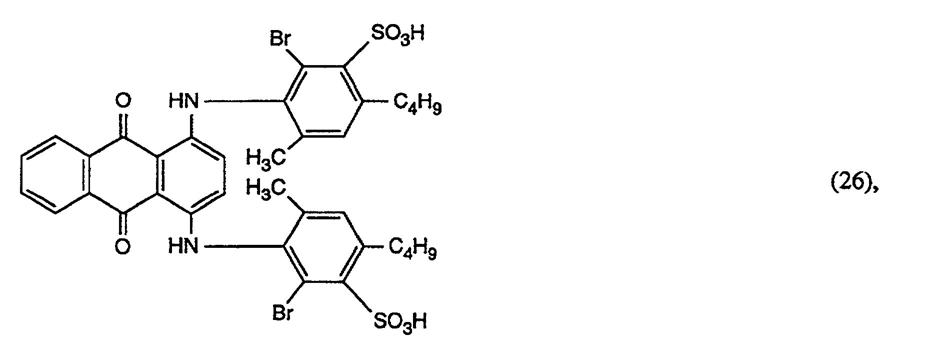

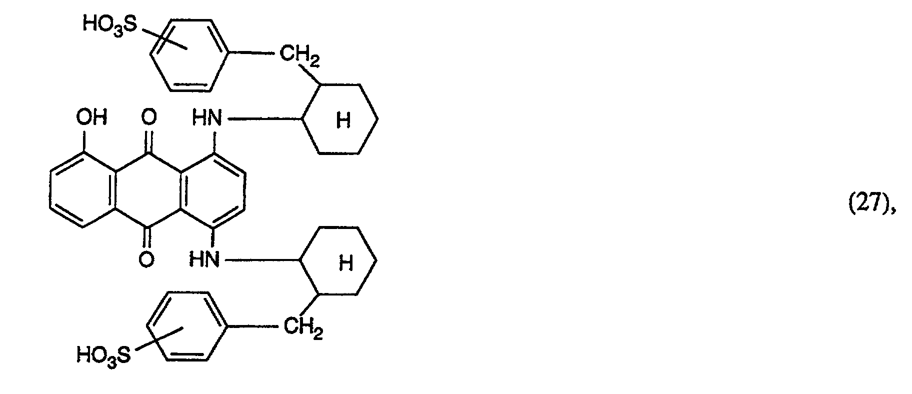

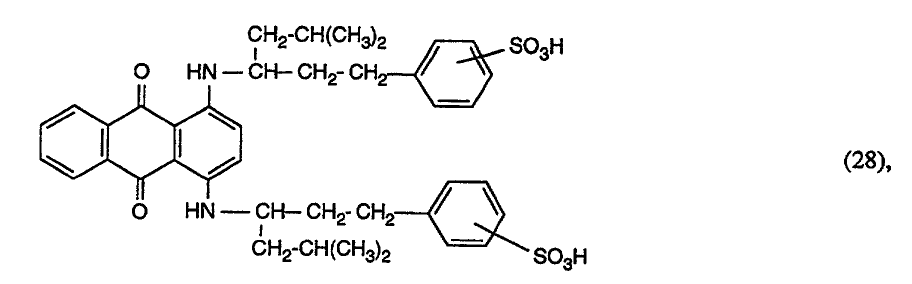

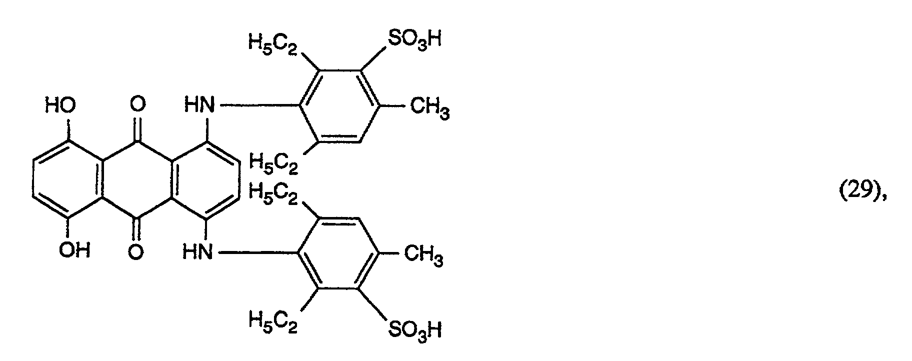

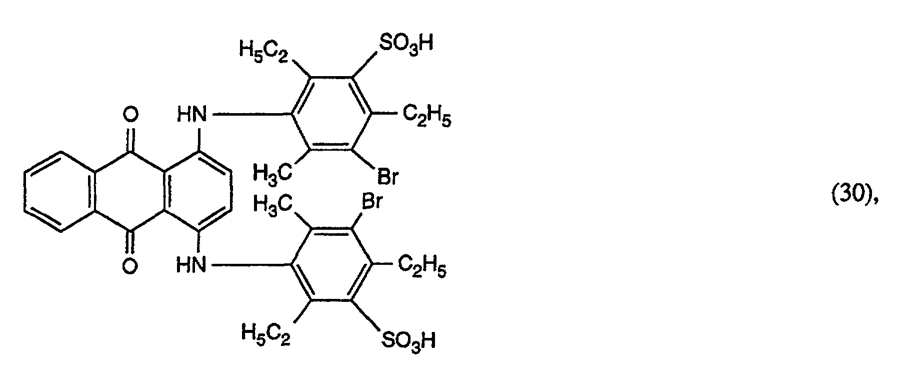

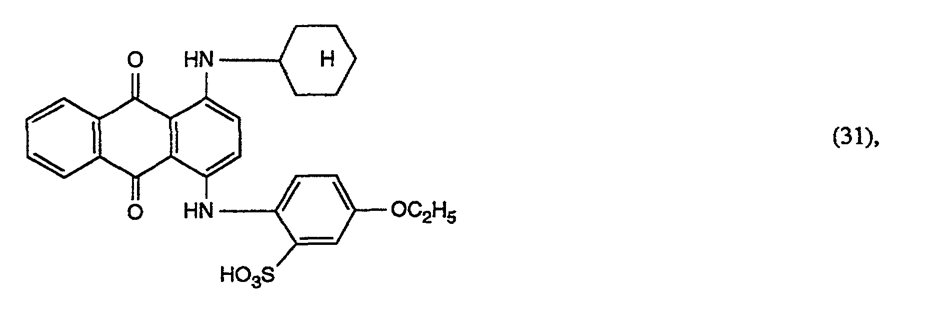

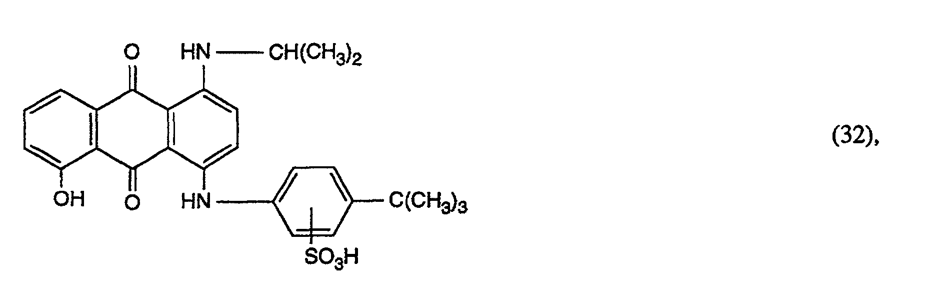

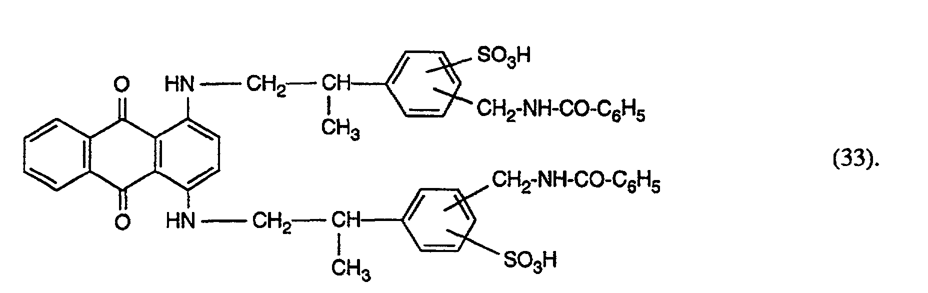

Von besonderem Interesse ist der Anthrachinonfarbstoff der Formel (31).

Als C₁-C₄-Alkoxy kommen für R₃ Methoxy, Äthoxy, Propoxy, Isopropoxy, Butoxy, sek.-Butoxy, Isobutoxy oder tert.-Butoxy, insbesondere Methoxy oder Aethoxy, vorzugsweise Methoxy, in Betracht.

Als Kationen Ka kommen z.B. Alkali-, Erdalkali-, Ammonium-, Alkanolammonium- oder Alkylammoniumkationen in Betracht. Unter Ka sollen generell Gegenionen der negativ geladenen 1:2-Chromkomplexfarbstoffe verstanden werden, wobei Ka auch mehr als ein Kation, wie z.B. bei einwertigen Kationen, sein kann. Bevorzugt sind als Alkanolammonium- oder Alkylammoniumsalze solche, welche 1 bis 4 Alkyl- oder Alkanolreste mit jeweils 1 bis 4 Kohlenstoffatomen enthalten. Als Beispiele für entsprechende Kationen seien die Natrium-, Lithium- oder Ammoniumkationen oder Mono-, Di- oder Triäthanolammoniumkationen genannt. Von besonderem Interesse sind Natrium-, Lithium- oder Ammoniumkationen.

Als C₁-C₄-Alkyl kommen für R₆ bis R₁₆ sowie den entsprechenden Substituenten der Formazanverbindung der Formel (5) unabhängig voneinander Methyl, Aethyl, Propyl, Isopropyl, Butyl, Isobutyl, sek.-Butyl oder tert.-Butyl, insbesondere Methyl, in Betracht. Die Reste R₁₅ und R₁₆ in der Bedeutung als C₁-C₄-Alkyl können durch Hydroxyl oder C₁-C₄-Alkoxy, wie z.B. Methoxy oder Aethoxy, weitersubstituiert sein.

Als C₁-C₄-Alkoxy kommen für R₆ bis R₁₄ sowie den entsprechenden Substituenten der Formazanverbindung der Formel (5) unabhängig voneinander Methoxy, Äthoxy, Propoxy, Isopropoxy, Butoxy, sek.-Butoxy, Isobutoxy oder tert.-Butoxy, insbesondere Methoxy, in Betracht.

Als C₂-C₄-Alkanoylamino kommen für R₆ bis R₁₄ sowie den entsprechenden Substituenten der Formazanverbindung der Formel (5) unabhängig voneinander z.B. Acetylamino oder Propionylamino, insbesondere Acetylamino, in Betracht.

Als Halogen kommen für R₆ bis R₁₄ sowie den entsprechenden Substituenten der Formazanverbindung der Formel (5) unabhängig voneinander z.B. Fluor, Chlor oder Brom, insbesondere Chlor, in Betracht.

Als 1:2-Chrom- oder 1 :2-Kobaltkomplexfarbstoff von zwei gleichen oder zwei voneinander verschiedenen Azoverbindungen aus der Gruppe der Verbindungen der Formeln (2), (3) und (4) kommen insbesondere die folgenden in Betracht: 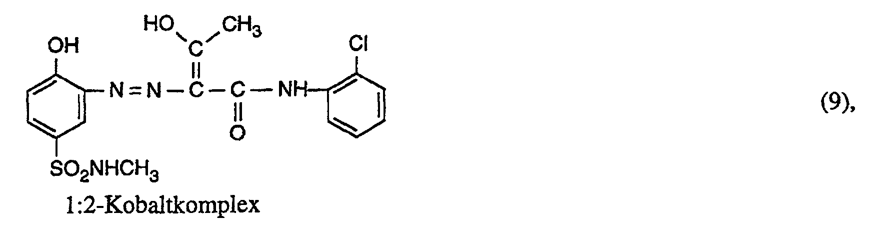 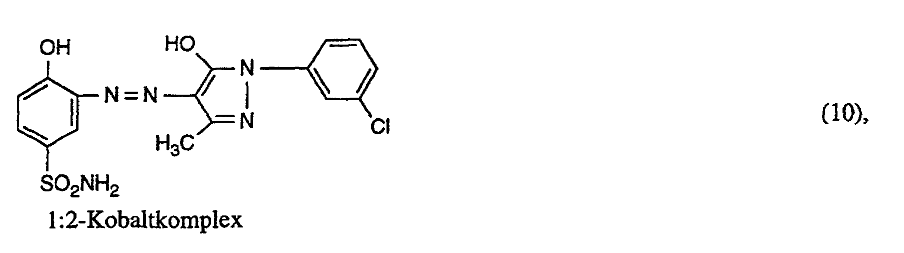 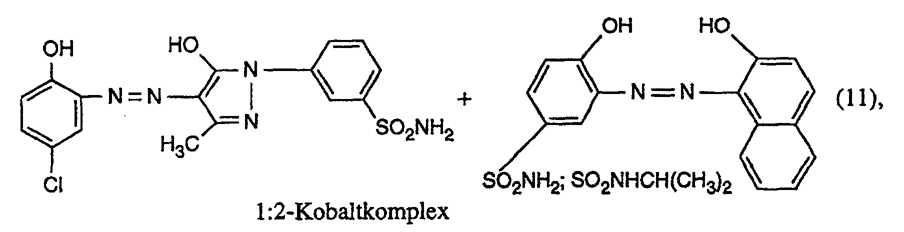 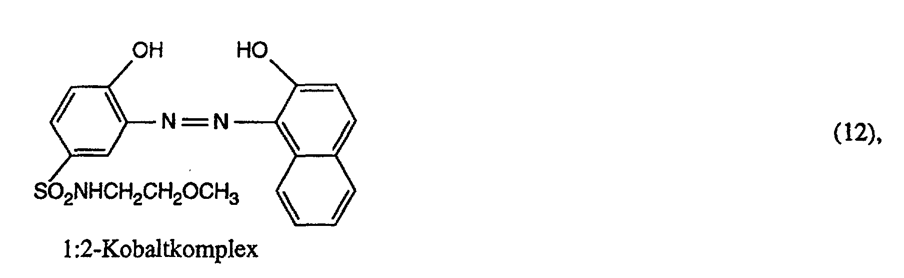 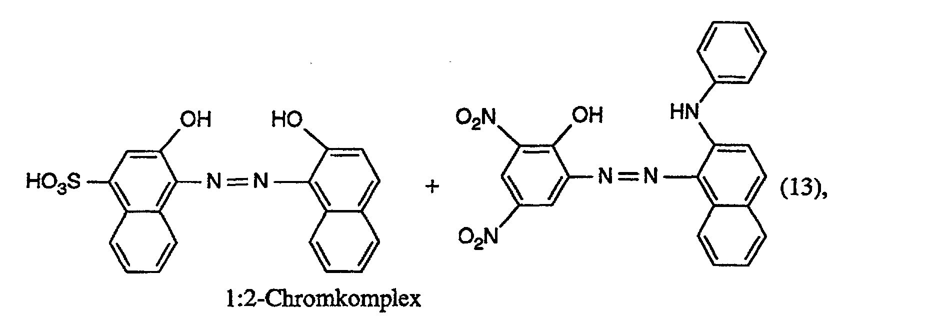 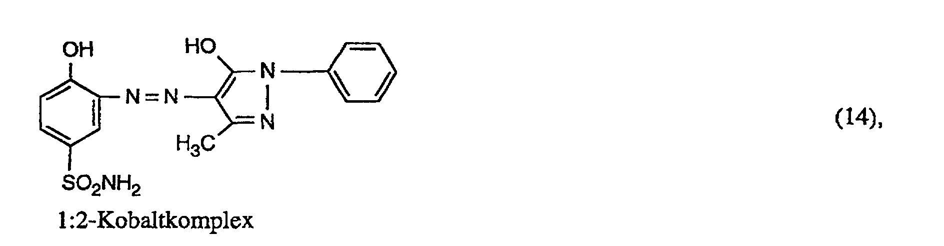 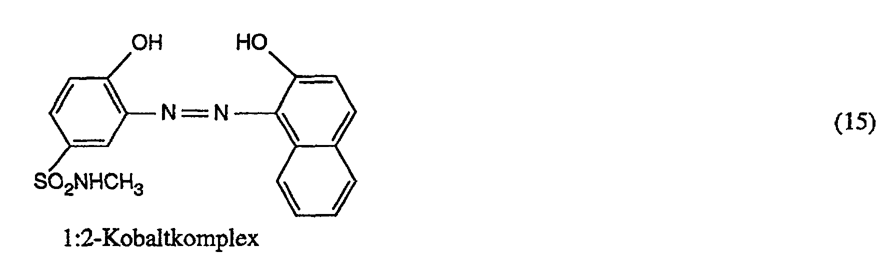 und

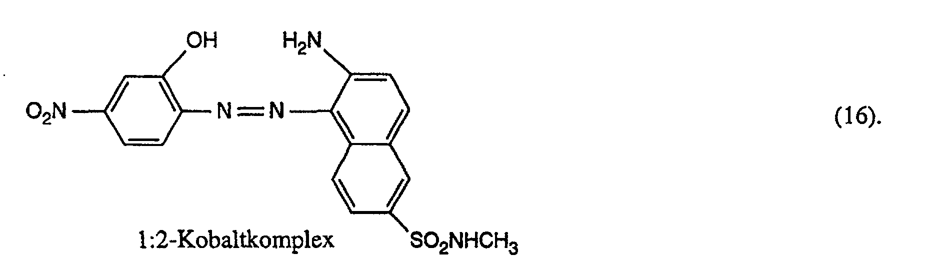

Von besonderem Interesse sind die 1:2-Kobaltkomplexfarbstoffe der Formeln (9), (10), (11), (12) und (16) sowie der 1:2-Chromkomplexfarbstoff der Formel (13).

Besonders bevorzugt handelt es sich bei R₁₅ und R₁₆ um Wasserstoff oder gegebenenfalls durch Hydroxyl substituiertes C₁-C₄-Alkyl. Hierbei bedeutet insbesondere einer der Reste R₁₅ und R₁₆ Wasserstoff. Ganz besonders bevorzugt sind R₁₅ und R₁₆ unabhängig voneinander Wasserstoff oder C₁-C₄-Alkyl, insbesondere Wasserstoff oder Methyl.

Für m ist die Zahl 1 oder 2, insbesondere die Zahl 2, bevorzugt.

Besonders bevorzugt als Formazanverbindungen der Formel (5) sind solche der Formel 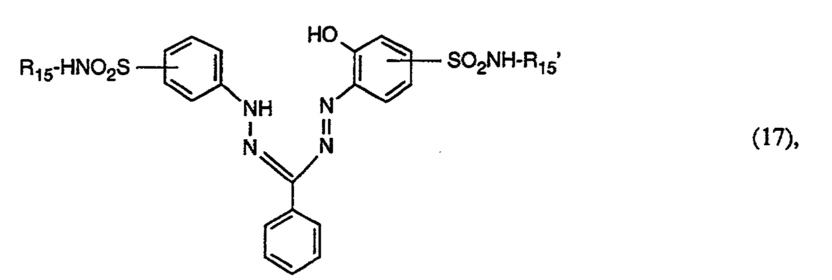 worin R₁₅ und R₁₅' unabhängig voneinander Wasserstoff oder C₁-C₄-Alkyl bedeuten und die Phenylreste keine weiteren Substituenten enthalten oder wie oben unter Formel (5) angegeben weitersubstituiert sein können. Vorzugsweise enthalten die Phenylreste der Verbindung der Formel (17) keine weiteren Substituenten.

Ganz besonders bevorzugt handelt es sich bei den Formazanverbindungen der Formel (5) um Verbindungen der Formel 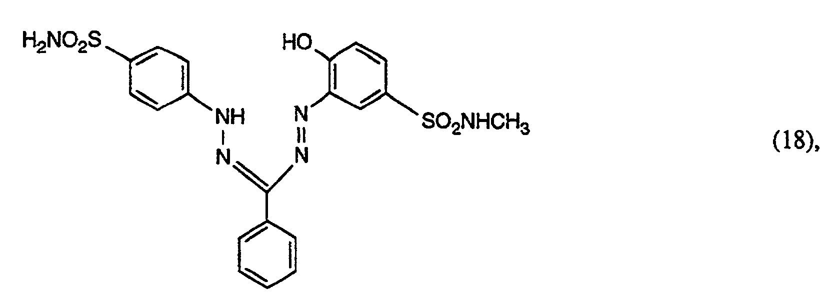 wobei die Phenylreste keine weiteren Substituenten enthalten oder wie oben für die Verbindung der Formel (5) angegeben weitersubstituiert sein können. Vorzugsweise enthalten die Phenylreste der Verbindung der Formel (18) keine weiteren Substituenten.

Für den in den endungsgemässen Farbstoffmischungen enthaltenem 1:2-Chromkomplexfarbstoff der Formel (1) gelten die oben angegebenen Bedeutungen und Bevorzugungen.

Besonders bevorzugt sind Farbstoffmischungen, welche neben dem 1:2-Chromkomplexfarbstoff der Formel (1) mindestens einen Farbstoff der Formeln 9 bis 16 und 18 bis 33 enthalten. Ganz besonders bevorzugt sind Farbstoffmischungen, welche neben dem 1:2-Chromkomplexfarbstoff der Formel (1) mindestens einen Farbstoff der Formeln (9), (10), (11), (12), (13) und (16) enthalten. Ferner sind Farbstoffmischungen besonders bevorzugt, welche neben dem 1:2-Chromkomplexfarbstoff der Formel (1) einen Farbstoff der Formel (31) enthalten.

In den erfindungsgemässen Farbstoffmischungen ist vorzugsweise mindestens ein 1:2-Chromkomplexfarbstoff der Formel (1) zusammen mit mindestens einem 1:2-Chrom- oder 1:2-Kobaltkomplexfarbstoff von zwei gleichen oder zwei voneinander verschiedenen Azoverbindungen aus der Gruppe der Verbindungen der Formeln (2), (3) und (4), insbesondere zusammen mit mindestens einem Farbstoff der Formeln (9), (10), (11), (12), (13) und (16), enthalten. Zusätzlich können diese Farbstoffmischungen als weitere Komponente einen Formazanfarbstoff der Formel (5) und/oder einen Anthrachinonfarbstoff der Formeln (19) bis (33) enthalten. Hierbei gelten für die genannten Farbstoffkomponenten die oben angegebenen Bedeutungen und Bevorzugungen.

Die 1:2-Chromkomplexfarbstoffe der Formel (1) eignen sich ferner für ein Verfahren zum Trichromie-Färben oder -Bedrucken von natürlichem oder synthetischem Polyamidfasermaterial. Hierin kann zusätzlich zu dem 1:2-Chromkomplexfarbstoff der Formel (1) ein 1:2-Kobaltkomplexfarbstoff der Formazanverbindung der (5) verwendet werden. Als gelb- oder orangefärbende Komponente verwendet man vorzugsweise Farbstoffe der Formel (9) oder (10) und als rotfärbenden Komponente vorzugsweise einen Farbstoff der Formel (11) oder (12). Für die 1:2-Chromkomplexfarbstoffe der Formel (1) und die Formazanverbindungen der Formel (5) gelten hierbei die oben angegebenen Bedeutungen und Bevorzugungen.

Die erfindungsgemässen Farbstoffmischungen können z.B. durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen z.B. durch Zerstäubungstrocknung der wässrigen Farbstoffmischungen hergestellt werden.

Die Farbstoffmischungen enthalten bevorzugt 5 bis 95 Gew.%, insbesondere 10 bis 90 Gew.-% und vorzugsweise 20 bis 80 Gew.% des 1:2-Chromkomplexfarbstoffes, bezogen auf die Gesamtmenge der Farbstoffe der Mischungen.

In den erfindungsgemässen Farbstoffmischungen liegen die einzelnen Farbstoffe, soweit diese Sulfogruppen enthalten, entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt. Als Gegenionen von Metallkomplexfarbstoffen mit negativer Ladung kommen z.B. die Kationen der oben genannten Salze in Betracht.

Die Farbstoffmischungen enthalten in der Regel weitere Zusätze, wie z.B. Kochsalz oder Dextrin.

1:2-Chromkomplexfarbstoffen der Formel (1) sind bekannt oder können in Analogie zu bekannten Verbindungen erhalten werden, z.B. wenn man eine 1:1-Chromkomplexverbindung der Formel 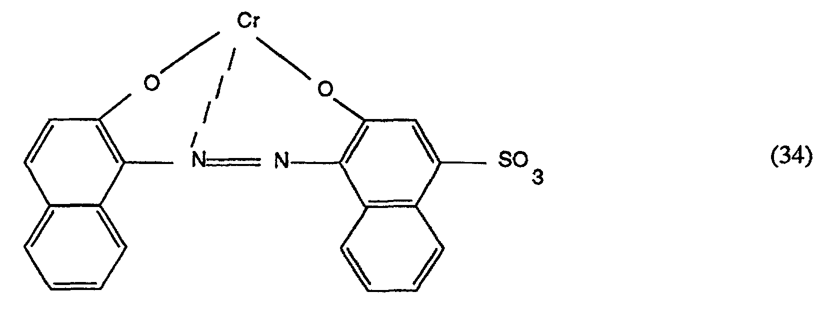 mit einer Azoverbindung der Formel 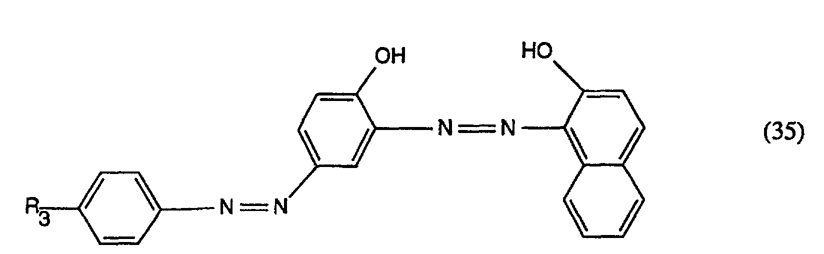 umsetzt, wobei R₃ die unter Formel (8) angegebenen Bedeutung hat.

Die Umsetzung der 1:1-Chromkomplexverbindung der Formel (34) mit der Azoverbindung der Formel (35) erfolgt z.B. in wässrigem Medium bei einer Temperatur von z.B. 40 bis 130°C, insbesondere 70 bis 100°C, bei einem pH-Wert von beispielsweise 8 bis 14, insbesondere bei einem pH-Wert von 10 bis 13. Vorteilhafterweise erfolgt die Umsetzung in Gegenwart eines Mineralsäure abstumpfenden oder alkalischen Mittels, wie z.B. in Gegenwart von Alkalicarbonat, Alkaliacetat oder Alkalihydroxid, wobei als Alkali Natrium bevorzugt ist.

Die Verbindungen der Formeln (34) und (35) sind bekannt oder können in Analogie zu bekannten Verfahren erhalten werden.

So können 1:1-Chromkomplexverbindungen der Formel (34) gemäss üblichen Chromierungsverfahren erhalten werden, wobei die Reaktion mit einem Chromsalz z.B. in wässrigem Medium, gebenenfalls unter Druck, bei einer Temperatur von z.B. 90 bis 130°C ausgeführt werden kann. Als Chromsalze kommen z.B. Chrom(III)-acetat, Chrom(III)-nitrat, Chrom(III)-chlorid, Chrom(III)-salicylat oder insbesondere das Chrom(III)-sulfat in Betracht.

Verbindungen der Formel (35) können gemäss üblichen Diazotierungs- und Kupplungsreaktionen erhalten werden. Die Diazotierung erfolgt in der Regel durch Einwirken salpetriger Säure in wässrig-mineralsaurer Lösung bei tiefer Temperatur, z.B. 0 bis 20°C, die Kupplung vorteilhaft bei alkalischen pH-Werten, z.B. bei pH-Werten von 8 bis 12.

Die 1:2-Chrom- oder 1:2-Kobaltkomplexfarbstoffe von zwei gleichen oder zwei voneinander verschiedenen Azoverbindungen aus der Gruppe der Verbindungen der Formeln (2), (3) und (4), die Formazanverbindungen der Formel (5) sowie die Anthrachinonfarbstoffe der Formeln (19) bis (33) sind bekannt oder können in Analogie zu bekannten Verbindungen erhalten werden.

Die 1:2-Kobaltkomplexfarbstoffe der Formazanverbindungen der Formel (5) können in an sich bekannter Weise hergestellt werden, z.B. indem man die metallfreie Verbindung der Formel (5) mit einem Kobaltsalz metallisiert.

Die Metallisierung findet z.B. in einem wässrigen Medium, welches einen alkalischen pH-Wert, z.B. einen Wert von 7,5 bis 12 und vorzugsweise 8 bis 12, aufweist, bei einer Temperatur von 40 bis 100°C und insbesondere 40 bis 60°C statt. Geeignete Kobaltsalze sind z.B. das Acetat, Nitrat, Chlorid oder insbesondere das Sulfat.

Die 1:2-Chrom- oder 1:2-Kobaltkomplexfarbstoffe von zwei gleichen oder zwei voneinander verschiedenen Azoverbindungen aus der Gruppe der Verbindungen der Formeln (2), (3) und (4) können z.B. analog den in der GB-A-716,753, GB-A-719,274, GB-A-745,641 sowie GB-A-851,861 angegebenen Verfahren erhalten werden.

Anthrachinonfarbstoffe der Formeln (19) bis (33) können z.B. analog den in der GB-A-903,590, GB-A-945,806, GB-A-2,009,214 sowie US-A-3,491,125 angegebenen Verfahren erhalten werden.

Gegenstand der Erfindung ist ferner ein Verfahren zum Färben oder Bedrucken von hydroxylgruppenhaltigen oder stickstoffhaltigen Fasermaterialien oder von Leder mit den erfindungsgemässen Farbstoffmischungen.

Als Fasermaterialien kommen bevorzugt sowohl natürliche Polyamidfasermaterialien, wie z.B. Seide oder insbesondere Wolle, als auch synthetische Polyamidfasermaterialien, wie z.B. Polyamid 6 oder Polyamid 6.6, oder woll- oder polyamidhaltige Mischgewebe in Frage. Von besonderem Interesse sind hierbei synthetische Polyamidfasermaterialien.
Das genannte Fasermaterial kann dabei in den verschiedensten Verarbeitungsformen vorliegen, wie z.B. als Faser, Garn, Gewebe oder Gewirke und insbesondere in Form von Teppichen.

Das Färben oder Drucken kann in üblichen Färbe- oder Druckapparaturen erfolgen. Die Färbeflotten oder Druckpasten können weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die erfindungsgemässen Farbstoffmischungen ergeben egale Färbungen mit guten Allgemeinechtheiten, insbesondere guter Reib-, Nass-, Nassreib-, Licht- und Heisslichtechtheit. Ferner zeichnen sich die erfindungsgemässen Farbstoffmischungen durch ein bezüglich der Toxizität vorteilhaftes Verhalten sowie durch gutes Aufziehverhalten aus.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Herstellungsbeispiel 1:

a) 12,32 Teile p-Anisidin werden in einer Mischung aus 200 Teilen Wasser und 30 Teilen Salzsäure (32%) bei einer Temperatur von 40 bis 50°C verrührt. Anschliessend wird die Reaktionsmischung auf eine Temperatur von 0 bis 5°C abgekühlt und durch Zugabe von 25,9 Teilen einer 4-normalen wässrigen Natriumnitritlösung innerhalb von ca. 30 Minuten diazotiert.

Zur Herstellung einer Lösung der Kupplungskomponente werden 15,88 Teile 2-Acetamidophenol in einer Mischung aus 100 Teilen Eiswasser und 12 Teilen einer wässrigen Natriumhydroxidlösung (30%) gelöst. Anschliessend wird auf eine Temperatur von -5 bis 0°C abgekühlt. Nach Zugabe von 24 Teilen Natriumchlorid wird zu der so erhaltenen Lösung der Kupplungskomponente die wie oben angegeben erhältliche Lösung der Diazokomponente bei einer Temperatur von 0°C innerhalb von ca. 90 Minuten zulaufen gelassen, wobei der pH durch Zugabe einer wässrigen Natriumhydroxidlösung bei einem Wert von 10 gehalten wird. Es wird über Nacht im Eisbad nachgerührt, das ausgefallene Produkt filtriert und mit wässriger Natriumchloridlösung gewaschen. Man erhält eine Paste, welche die Verbindung der Formel 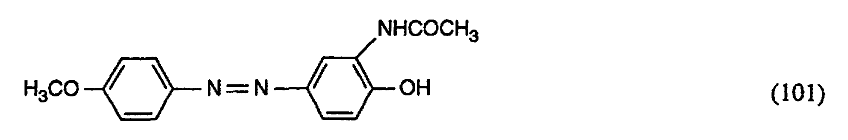 enthält.

b) 84,6 Teile der wie oben unter a) angegeben erhältlichen, die Verbindung der Formel (101) enthaltenden Paste werden in 250 Teilen einer 2-normalen wässrigen Natriumhydroxidlösung verrührt und unter Rückfluss innerhalb von 4 Stunden verseift. Die erhaltene Lösung wird dann auf eine Temperatur von 15 bis 20°C abgekühlt, mit Salzsäure (16%) auf einen pH-Wert von 7 gestellt und über Nacht stehen gelassen. Das ausgefallene Produkt wird abfiltriert und mit wässriger Natriumchloridlösung gewaschen. Man erhält eine Paste, welche die Verbindung der Formel 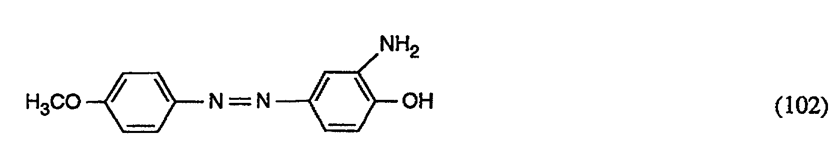 enthält.

c) 102,3 Teile der wie oben unter b) angegeben erhältlichen, die Verbindung der Formel (102) enthaltenden Paste werden in einer Mischung aus 150 Teilen Wasser und 18,3 Teilen einer wässrigen Natriumhydroxidlösung (15%) bei Raumtemperatur und einem pH-Wert von ca. 12 gelöst. Anschliessend werden unter Rühren 25 Teile einer 4-normalen wässrigen Natriumnitritlösung zugegeben. Die so erhaltene Lösung wird innerhalb von 2 Stunden zu einer Mischung aus 50 Teilen Eiswasser und 35 Teilen Salzsäure (32%) gegeben, wobei die Temperatur bei 0 bis 5°C gehalten wird. Es wird bei dieser Temperatur eine Stunde nachgerührt und anschliessend wird überschüssiges Nitrit mit Sulfaminsäure zerstört. Dann wird das erhaltene Produkt abfiltriert und mit wässriger Natriumchloridlösung gewaschen. Die so erhaltene Paste wird in 200 Teile Wasser suspendiert.

Zur Herstellung einer Lösung der Kupplungskomponente werden 13,6 Teile β-Naphthol in einer Mischung aus 250 Teilen Wasser, 14 Teilen einer wässrigen Natriumhydroxidlösung (30%) und 10,28 Teilen Natriumcarbonat bei einer Temperatur von 60°C gelöst.

Anschliessend wird auf eine Temperatur von 15°C abgekühlt und zu der so erhaltenen Lösung der Kupplungskomponente wird die wie oben angegeben erhältliche Suspension der Diazokomponente bei einer Temperatur von 15°C innerhalb von ca. 5 bis 10 Minuten zulaufen gelassen. Es wird über Nacht bei Raumtemperatur und einem pH-Wert von 12 nachgerührt, nach Erwärmung auf 85°C das ausgefallene Produkt filtriert, mit wässriger Natriumchloridlösung gewaschen und im Vakuum bei einer Temperatur von 50°C getrocknet. Man erhält eine Verbindung, welche der Formel 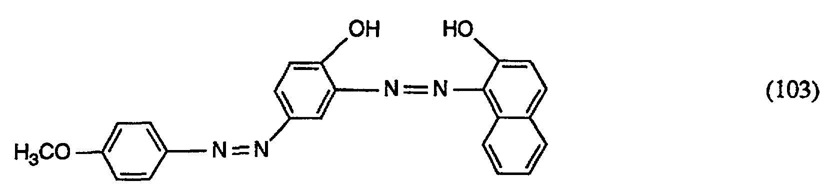 entspricht

d) 39,4 Teile der Verbindung der Formel 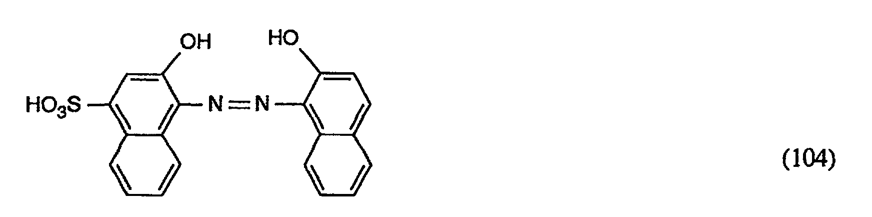 werden mit 500 Teilen Wasser, 13,7 Teilen Ameisensäure und 6,24 Teilen Chrom(III)-acetat angeschlämmt und in einem Autoklaven während 20 Stunden auf eine Temperatur von 100 bis 105°C erhitzt. Nach Abkühlung auf Raumtemperatur wird das ausgefallene Produkt abfiltriert, mit Wasser gewaschen und im Vakuum bei einer Temperatur von 50°C getrocknet. Man erhält eine 1:1-Chromverbindung, welche der Formel 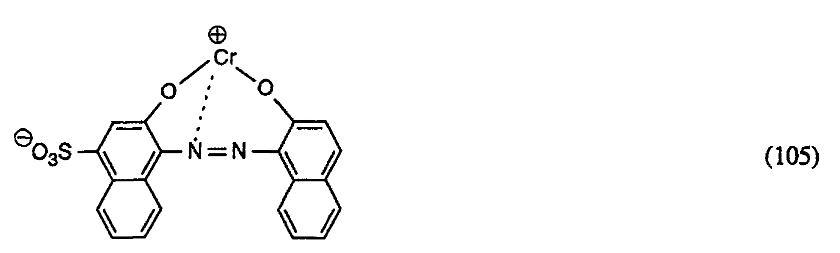 entspricht.

e) 4 Teile der Verbindung der Formel (103) werden in einer Mischung aus 100 Teilen Wasser und 0,5 Teilen einer wässrigen Natriumhydroxidlösung (15%) bei einer Temperatur von 85°C und einem pH-Wert von ca. 11 verrührt. Anschliessend werden in die erhaltene Suspension innerhalb von 30 Minuten 4,43 Teile der 1:1-Chromkomplexverbindung der Formel (105) eingetragen, wobei der pH durch Zugabe einer wässrigen Natriumhydroxidlösung (30%) bei einem Wert von 11 gehalten wird. Nach Zugabe von 0,4 Teilen Natriumcarbonat und 450 Teilen Wasser wird die Temperatur auf 95°C erhöht und die Reaktionsmischung eine Stunde gerührt. Anschliessend wird Natriumchlorid zugegeben und die Temperatur auf 90°C gesenkt. Nach Filtration, Waschen mit wässriger Natriumchloridlösung und Trocknung im Vakuum bei einer Temperatur von 50°C erhält man einen Farbstoff, der der Formel 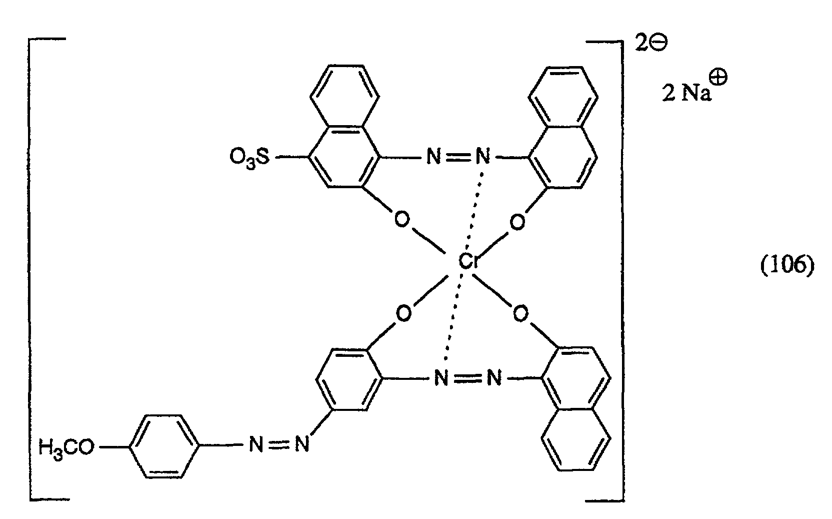 entspricht. Der Farbstoff der Formel (106) färbt Wolle und synthetisches Polyamidfasermaterial in schwarzen Farbtönen.

Färbebeispiel 1: Man färbt 10 Teile Polyamid 6.6-Gewebe in 200 Teilen einer wässrigen Flotte, die, bezogen auf das Fasergewicht, 1,32% des 1:2-Chromkomplexfarbstoffs gemäss Herstellungsbeispiel 1 enthält und mit Essigsäure und Natriumacetat auf pH 6 gestellt wird. Das Färbebad wird innerhalb von 45 Minuten auf 98°C erhitzt, 60 Minuten bei 96°C bis 98°C gehalten und dann innerhalb von 15 Minuten auf 70°C abgekühlt. Das gefärbte Gewebe wird anschliessend herausgenommen und wie üblich gespült und getrocknet. Man erhält ein in einem schwarzen Farbton gefärbtes Gewebe.

Färbebeispiele 2 bis 7: Verfährt man wie in Färbebeispiel 1 angegeben, verwendet jedoch anstelle von 1,32% des 1:2-Chromkomplexfarbstoffs gemäss Herstellungsbeispiel 1 die in der folgenden Tabelle 1 in Spalte 2 angegebenen Farbstoffe bzw. Farbstoffmischungen in den dort angegebenen Mengen, so erhält man Polyamid 6.6-Gewebe, welche in den in Spalte 3 angegebenen Farbtönen gefärbt sind. Die angegebenen Mengen der Farbstoffe sind bezogen auf das Fasergewicht.

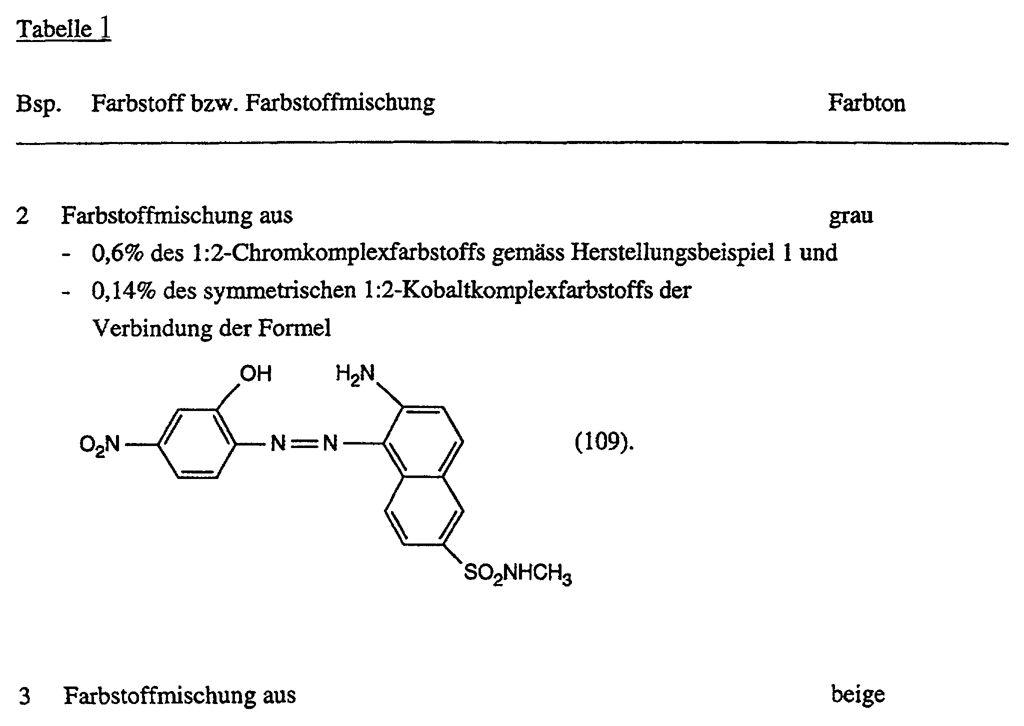

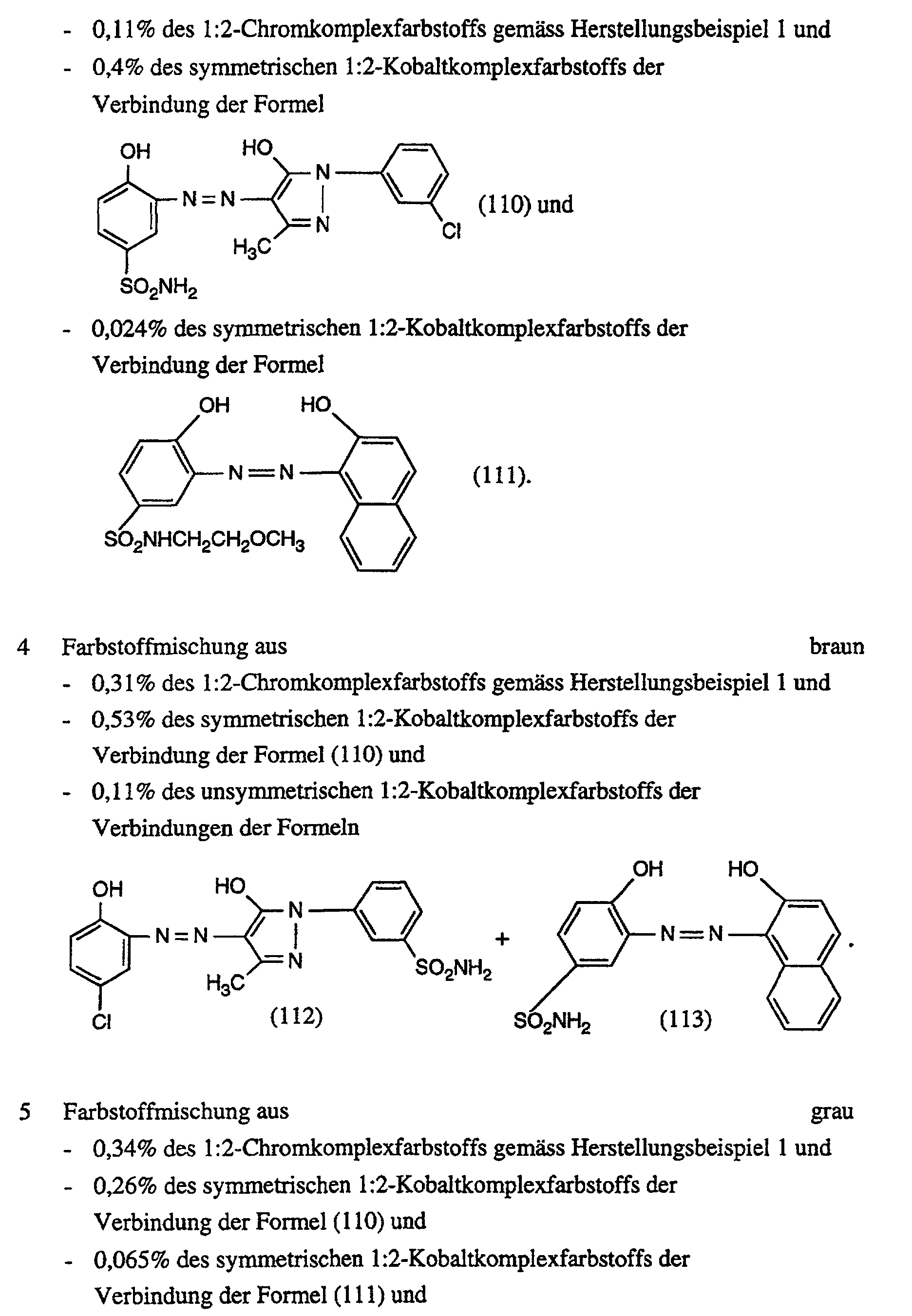

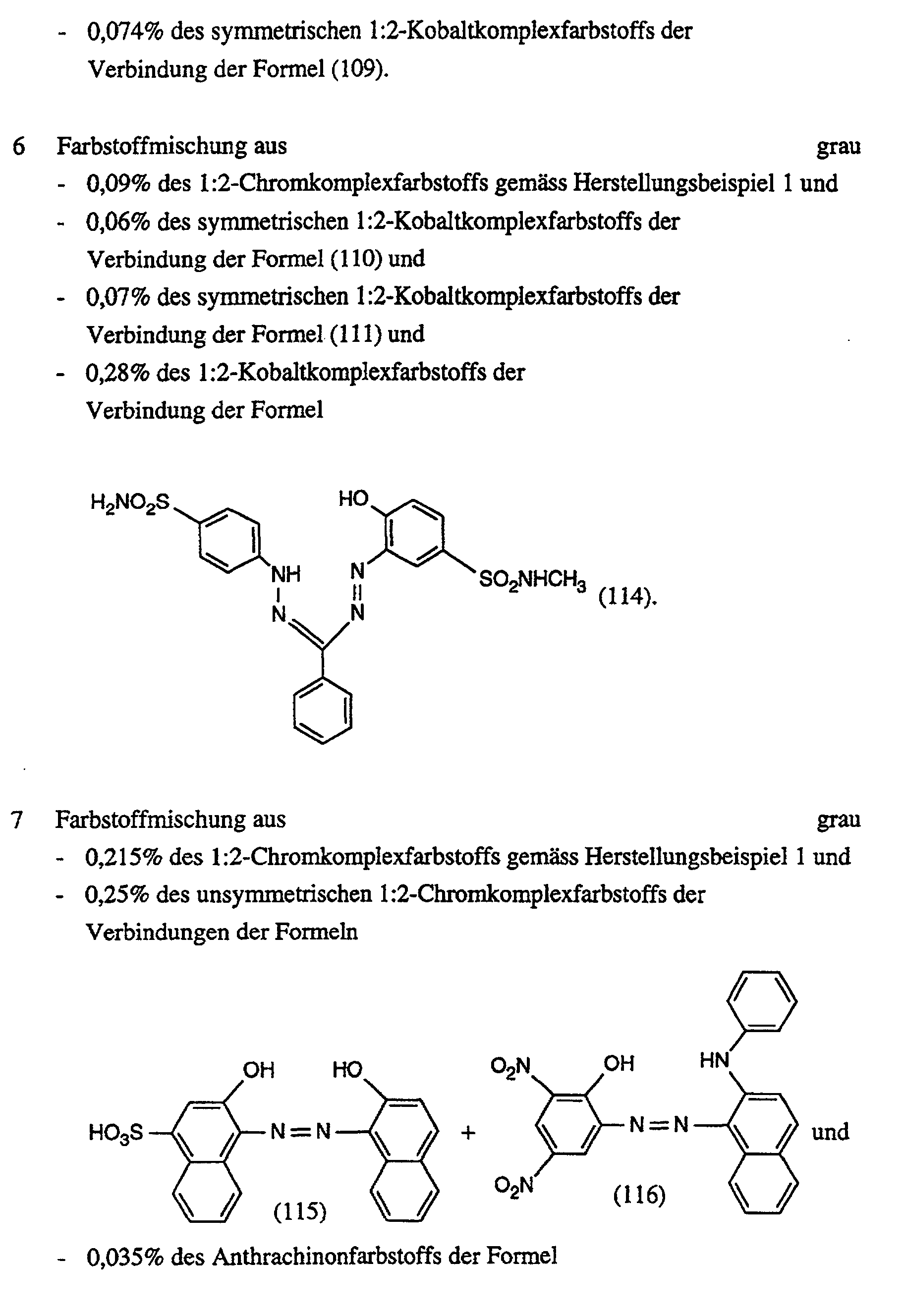

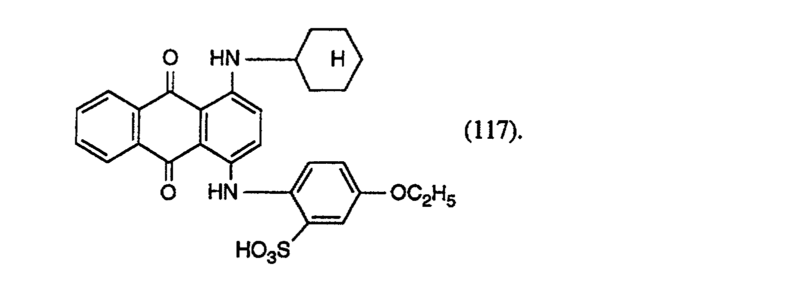

## Patentansprüche

1. Farbstoffmischungen, **dadurch gekennzeichnet, dass** sie mindestens einen 1:2-Chromkomplexfarbstoff der Formel (1) 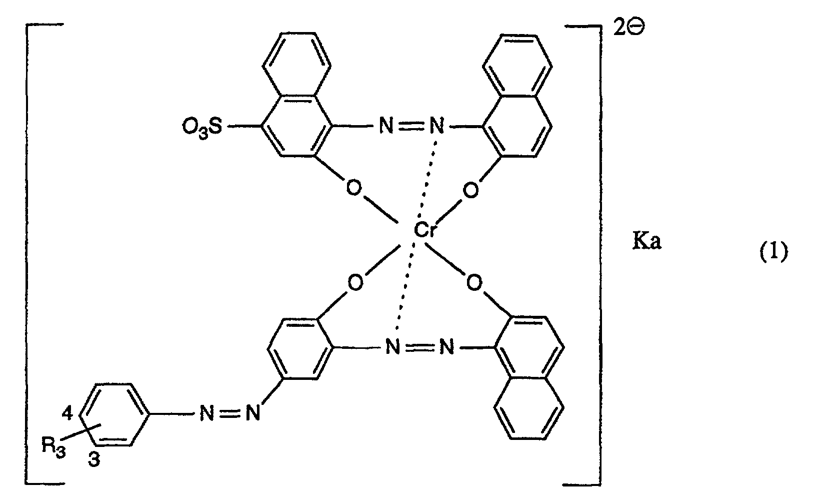 enthalten, worin R₃ ein in der bezeichneten 4-Position gebundener C₁-C₄-Alkoxyrest und Ka ein Kation oder mehrere Kationen ist,
zusammen mit mindestens einem 1:2-Chrom- oder 1:2-Kobaltkomplexfarbstoff von zwei gleichen oder zwei voneinander verschiedenen Azoverbindungen aus der Gruppe der Verbindungen der Formeln 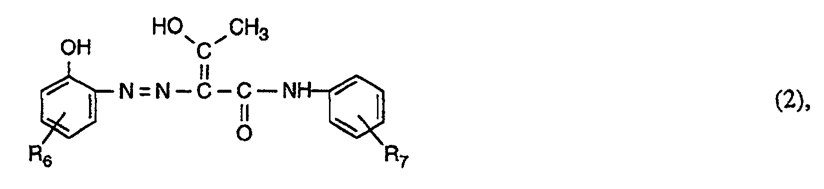 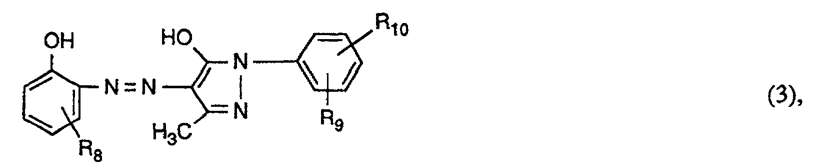 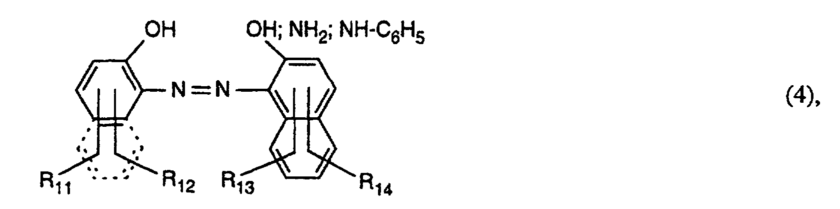 worin R₆, R₇, R₈, R₉, R₁₀, R₁₁, R₁₂, R₁₃ und R₁₄ unabhängig voneinander Wasserstoff, C₁-C₄-Alkyl, C₁-C₄-Alkoxy, C₂-C₄-Alkanoylamino, Halogen, Sulfo, Hydroxyl, Nitro, Sulfamoyl oder gegebenenfalls im Alkylteil durch Hydroxyl oder C₁-C₄-Alkoxy weitersubstituiertes N-C₁-C₄-Alkylsulfamoyl sind,
oder zusammen mit mindestens einem 1:2-Kobaltkomplexfarbstoff der Formazanverbindung der Formel (5) 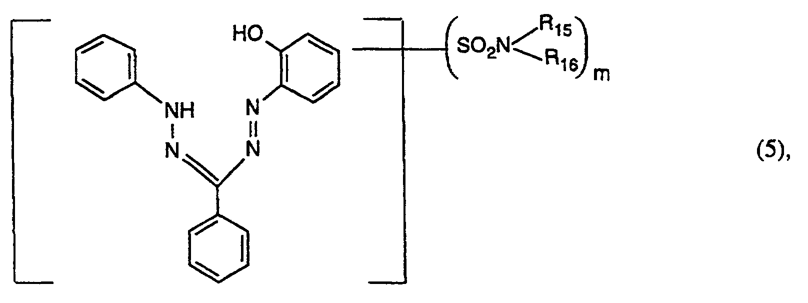 worin
R₁₅ und R₁₆ unabhängig voneinander Wasserstoff oder unsubstituiertes oder durch Hydroxyl oder C₁-C₄-Alkoxy substituiertes C₁-C₄-Alkyl sind,
m die Zahl 1, 2 oder 3 ist und
die Phenylreste der Verbindung der Formel (5) keine weiteren Substituenten enthalten oder durch C₁-C₄-Alkyl, C₁-C₄-Alkoxy, C₂-C₄-Alkanoylamino, C₁-C₄-Alkylsulfonyl, C₁-C₄-Hydroxyalkylsulfonyl, Halogen, Sulfo, Hydroxyl, Carboxyl oder Nitro weitersubstituiert sind,
oder zusammen mit mindestens einem Anthrachinonfarbstoff aus der Gruppe der Verbindungen der Formeln 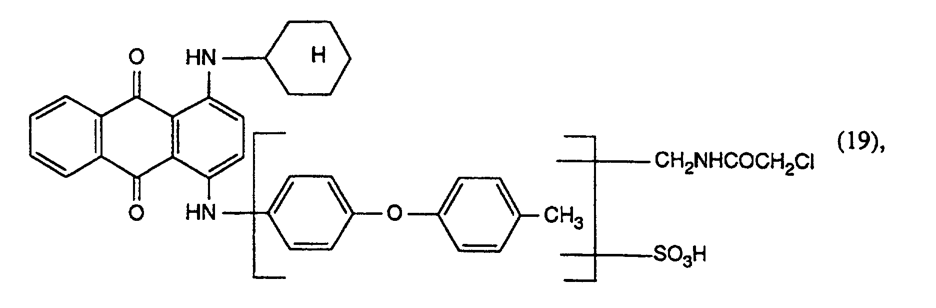 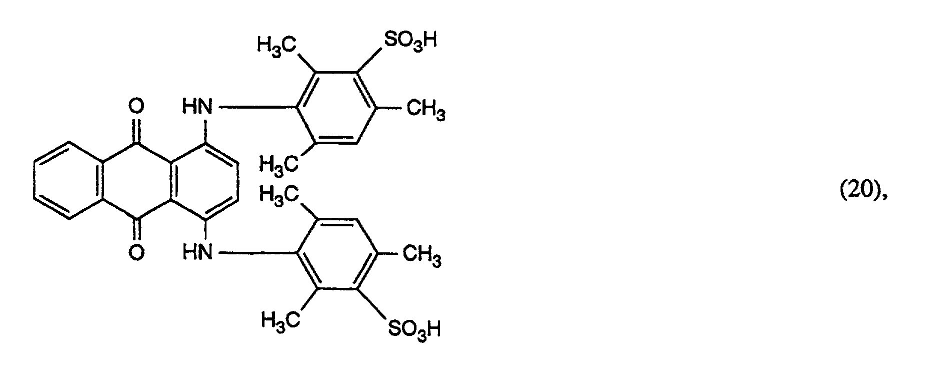 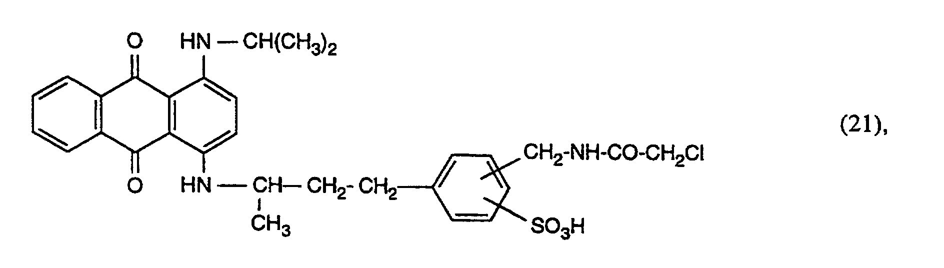 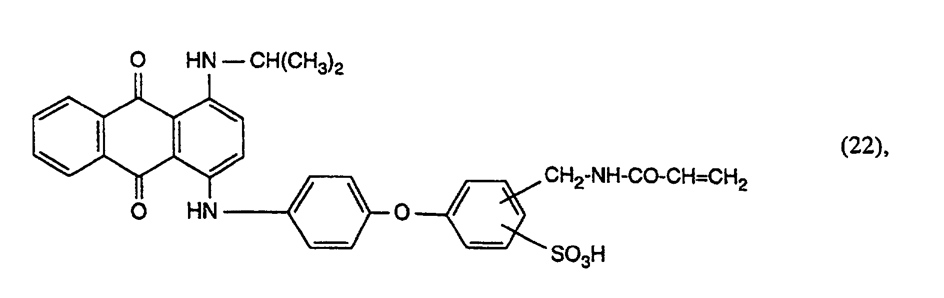 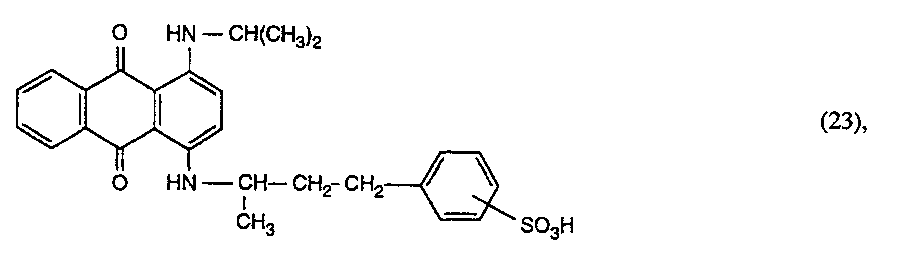 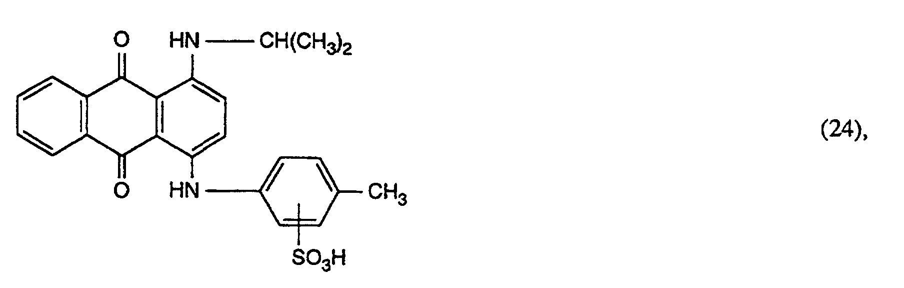 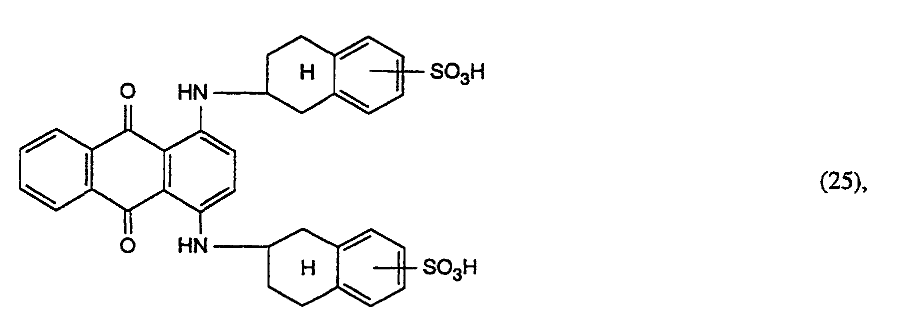 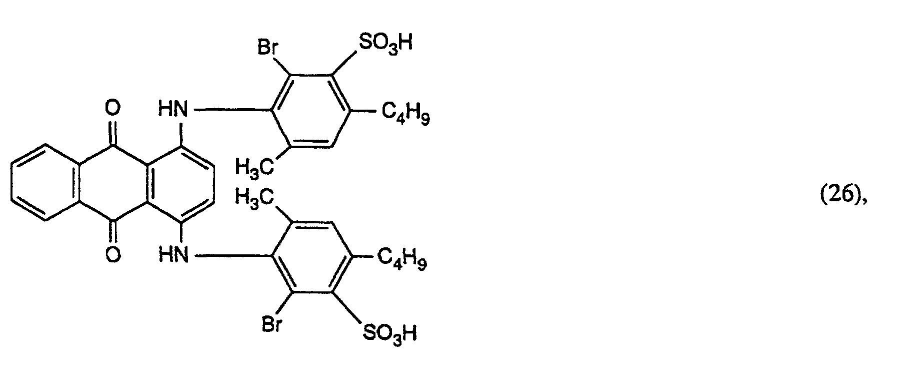 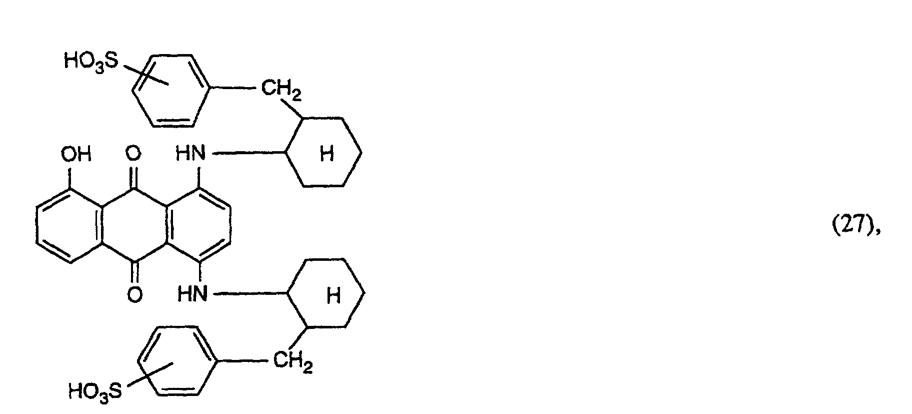 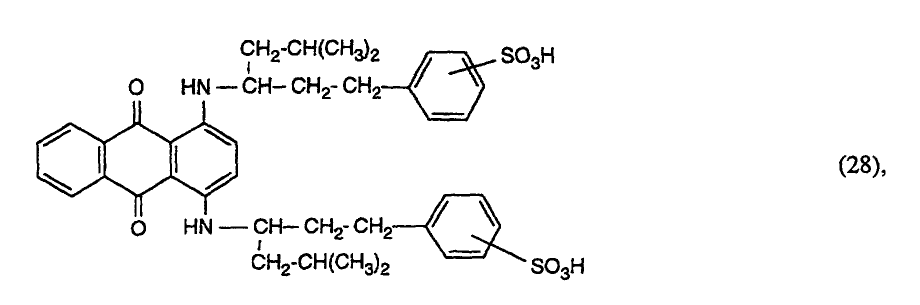 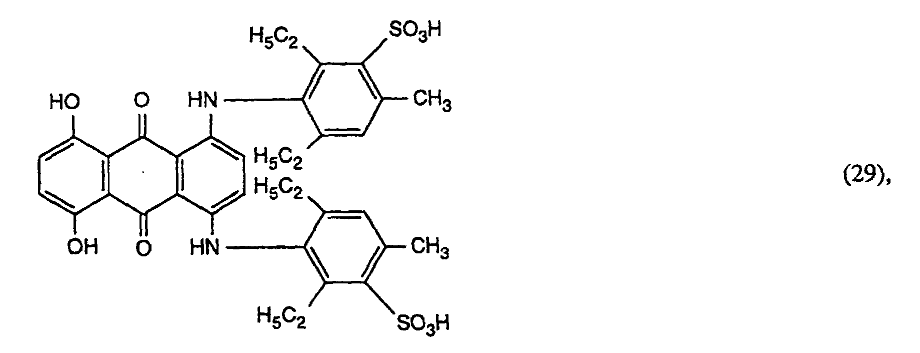 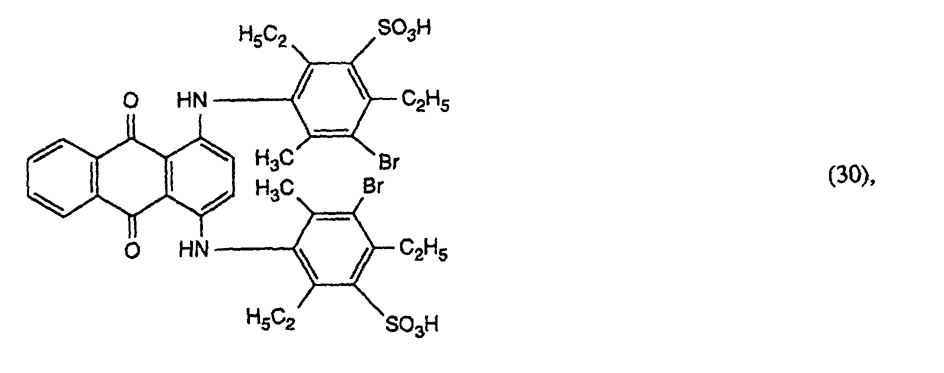 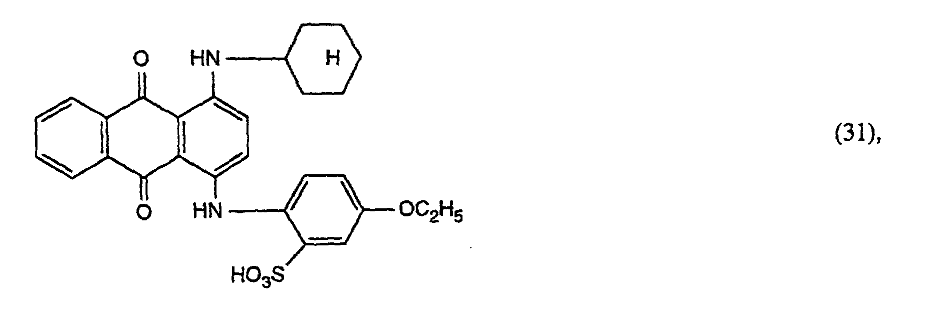 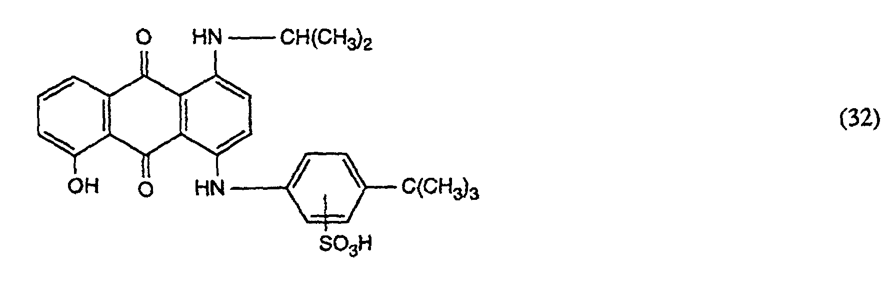 und

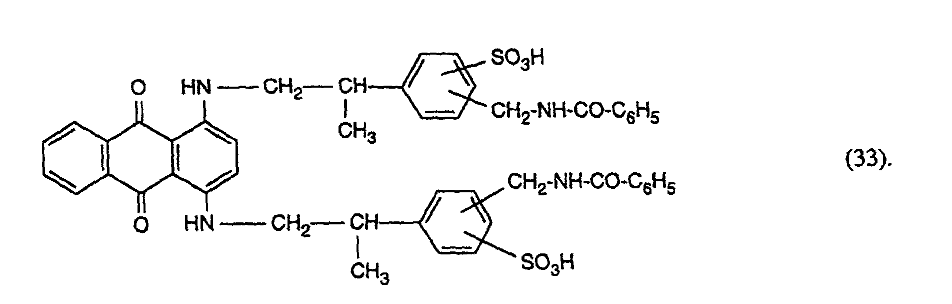

2. Farbstoffmischungen, **dadurch gekennzeichnet, dass** sie mindestens einen 1:2-Chromkomplexfarbstoff der Formel (1) 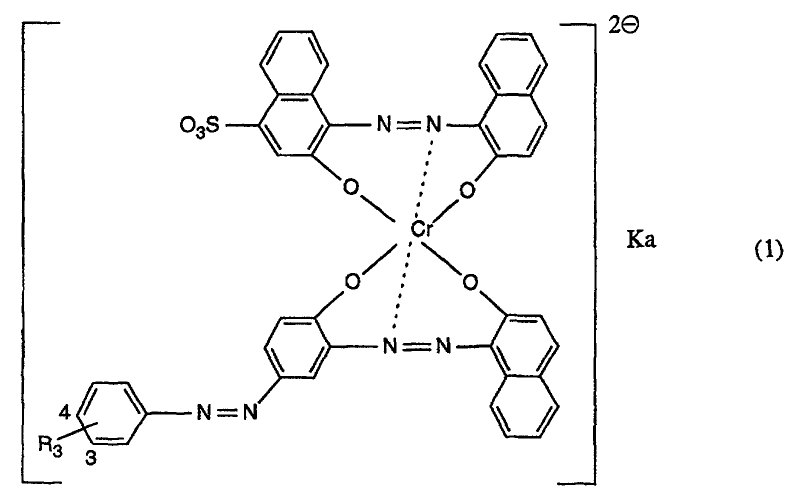 enthalten, worin R₃ ein in der bezeichneten 4-Position gebundener C₁-C₄-Alkoxyrest und Ka ein Kation oder mehrere Kationen ist,
zusammen mit mindestens einem 1:2-Chrom- oder 1:2-Kobaltkomplexfarbstoff von zwei gleichen oder zwei voneinander verschiedenen Azoverbindungen aus der Gruppe der Verbindungen der Formeln 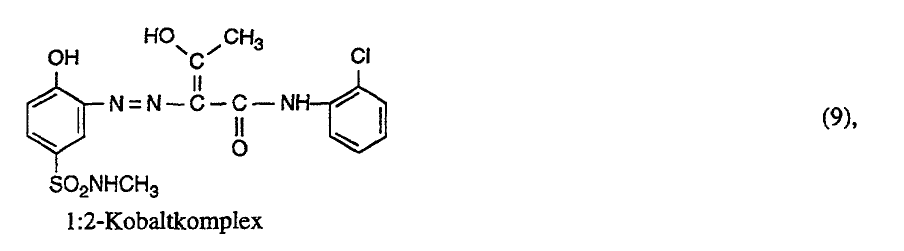 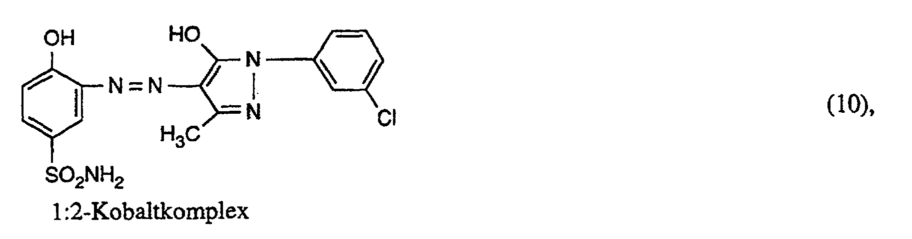 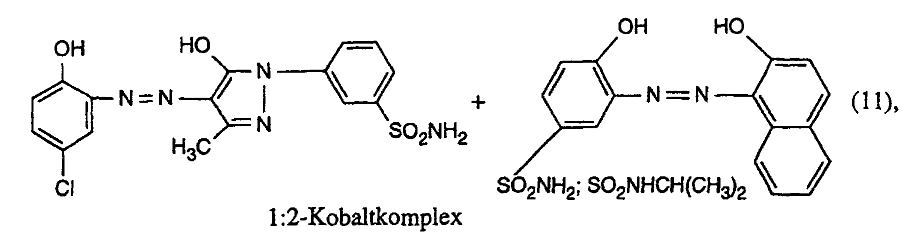 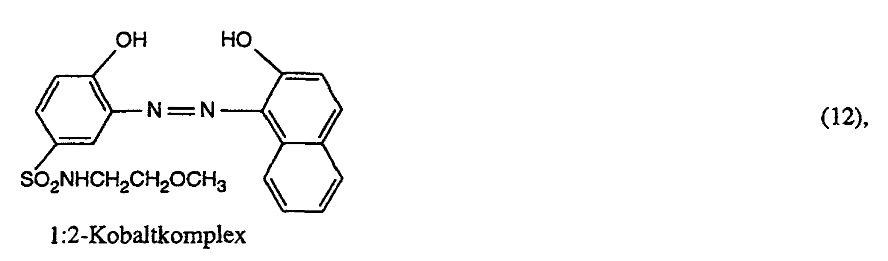 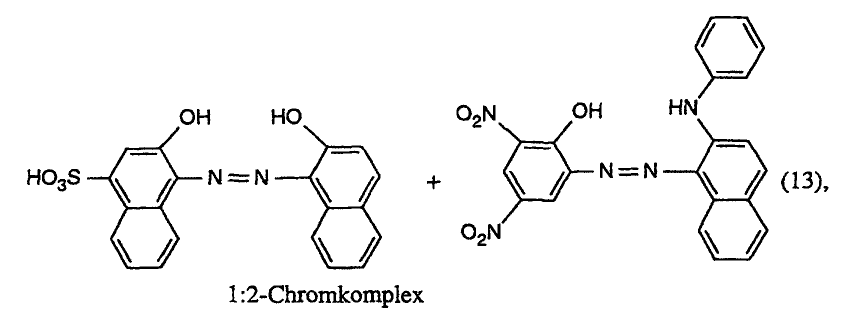 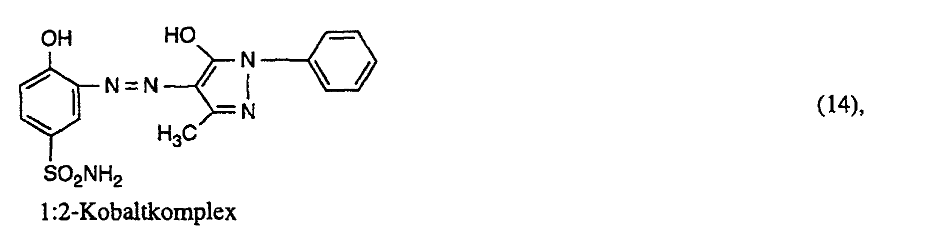 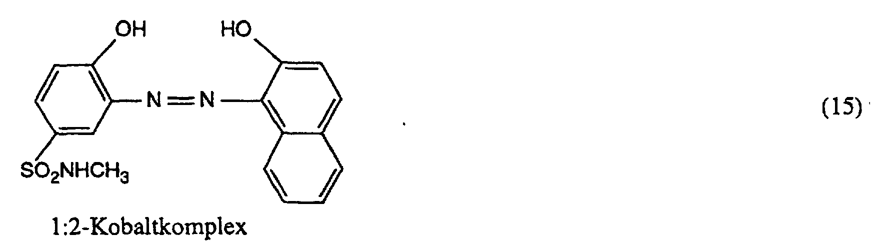 und 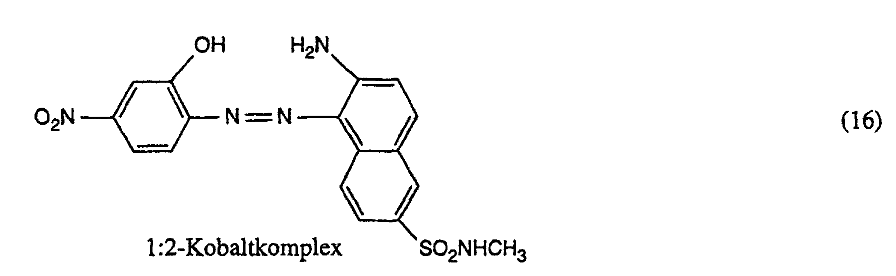 oder zusammen mit mindestens einem 1:2-Kobaltkomplexfarbstoff der Formazanverbindung der Formel (5) 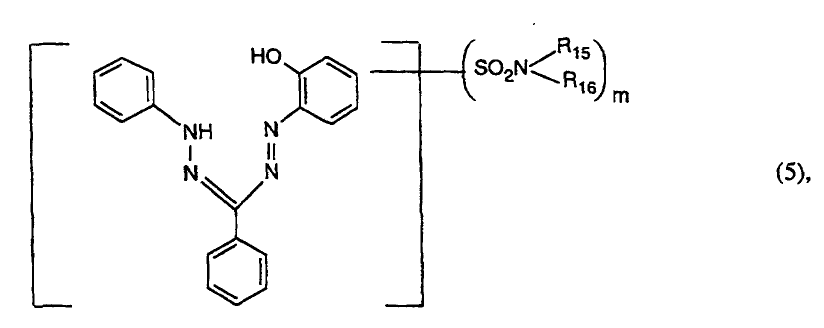 worin
R₁₅ und R₁₆ unabhängig voneinander Wasserstoff oder unsubstituiertes oder durch Hydroxyl oder C₁-C₄-Alkoxy substituiertes C₁-C₄-Alkyl sind,
m die Zahl 1, 2 oder 3 ist und
die Phenylreste der Verbindung der Formel (5) keine weiteren Substituenten enthalten oder durch C₁-C₄-Alkyl, C₁-C₄-Alkoxy, C₂-C₄-Alkanoylamino, C₁-C₄-Alkylsulfonyl, C₁-C₄-Hydroxyalkylsulfonyl, Halogen, Sulfo, Hydroxyl, Carboxyl oder Nitro weitersubstituiert sind,
oder zusammen mit mindestens einem Anthrachinonfarbstoff aus der Gruppe der Verbindungen der Formeln 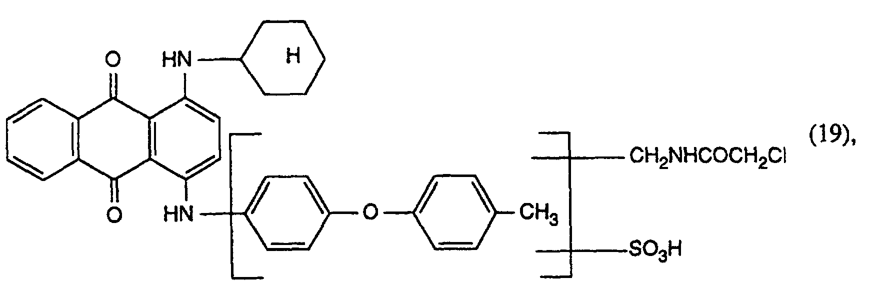 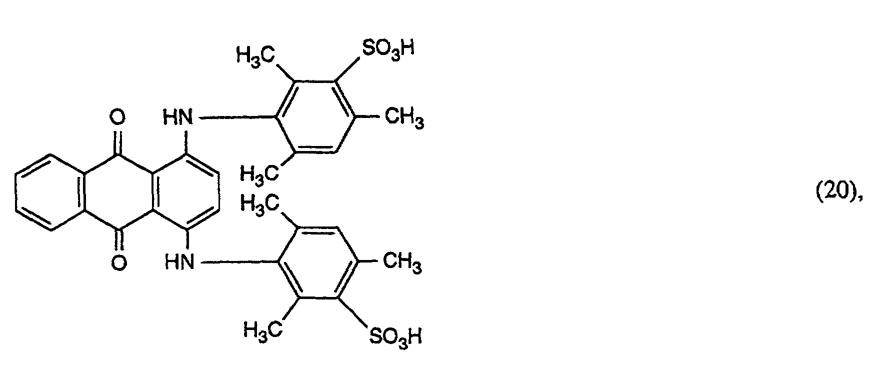 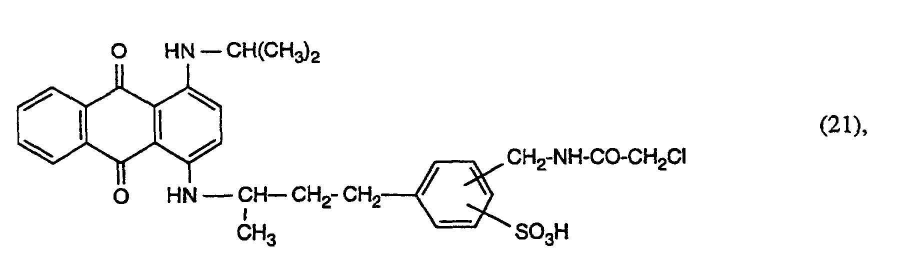 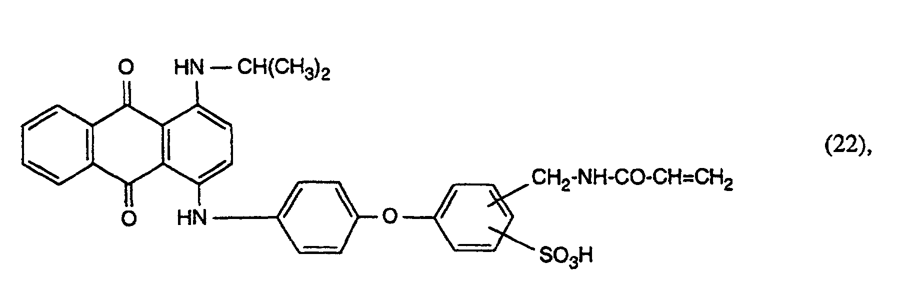 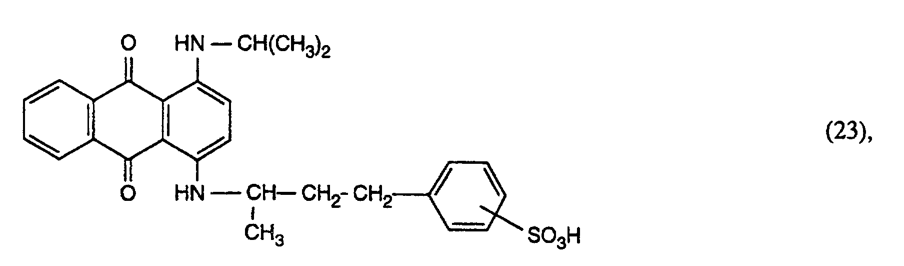 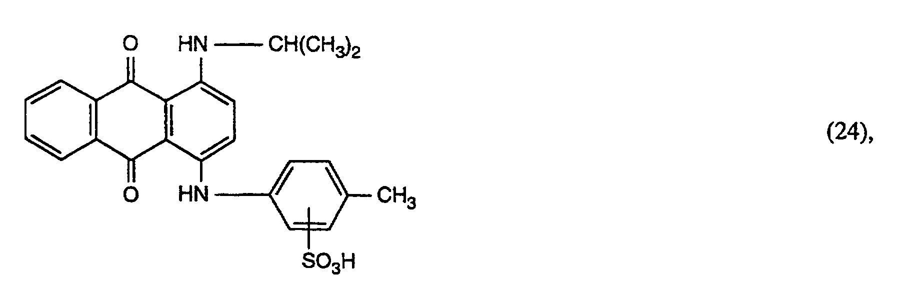 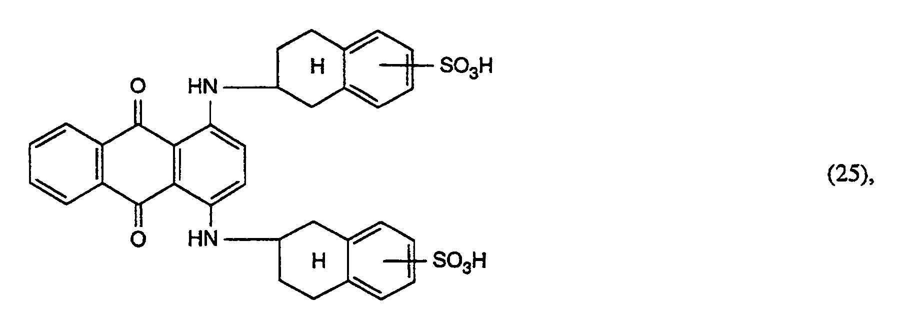 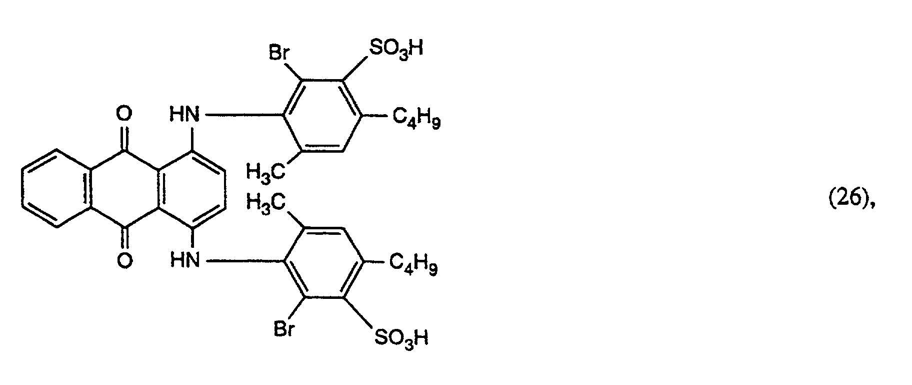 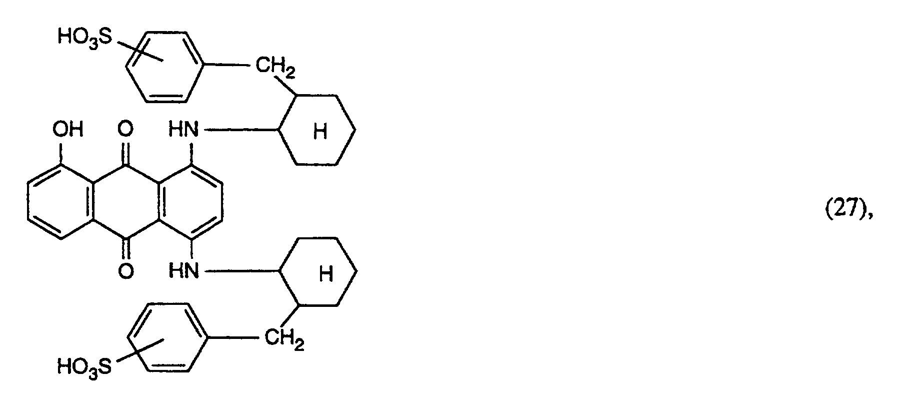 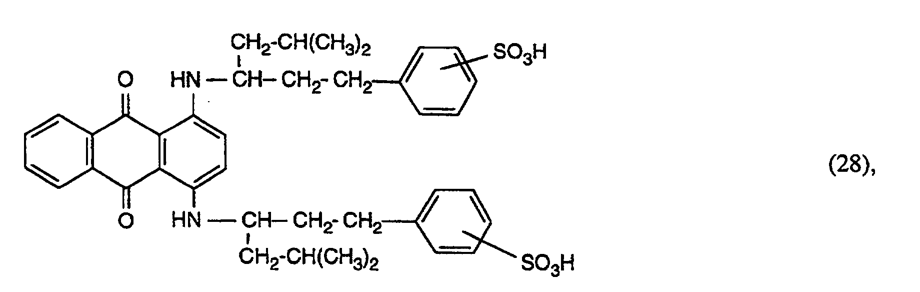 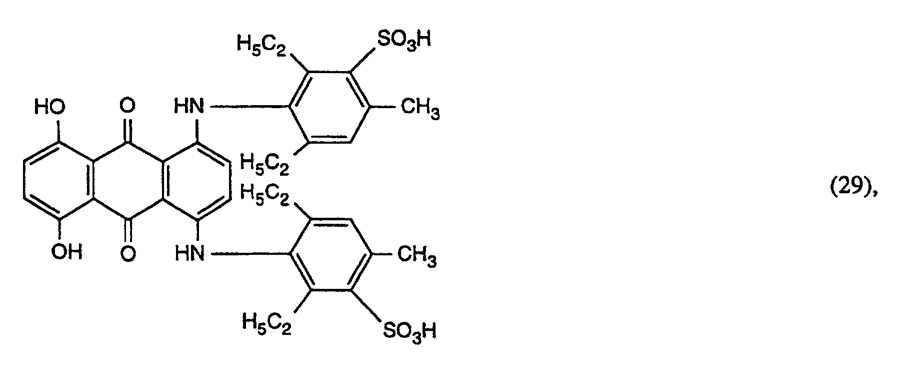 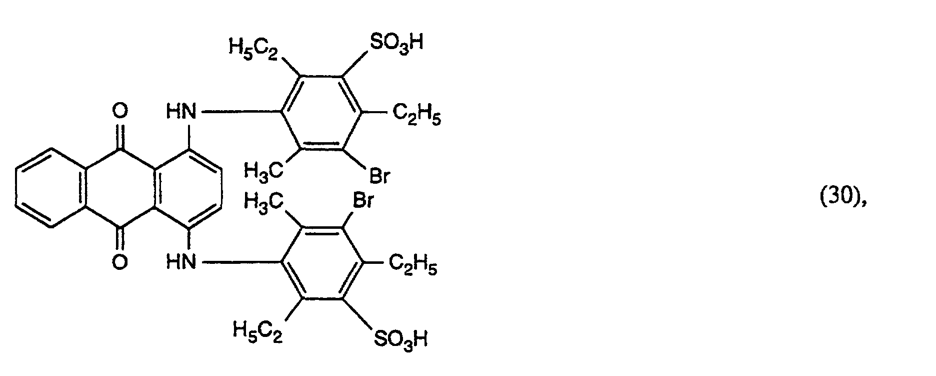 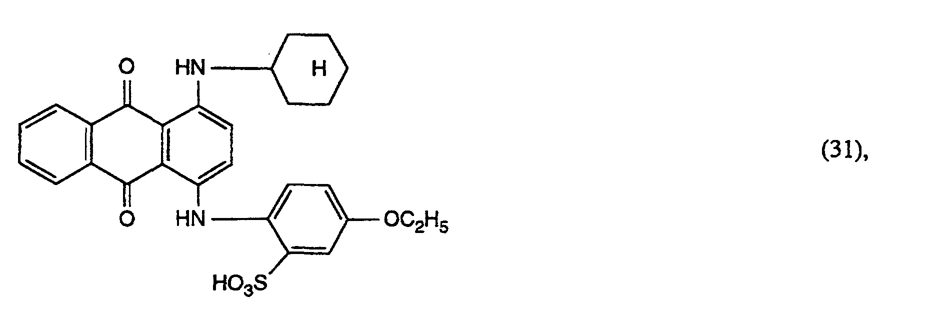 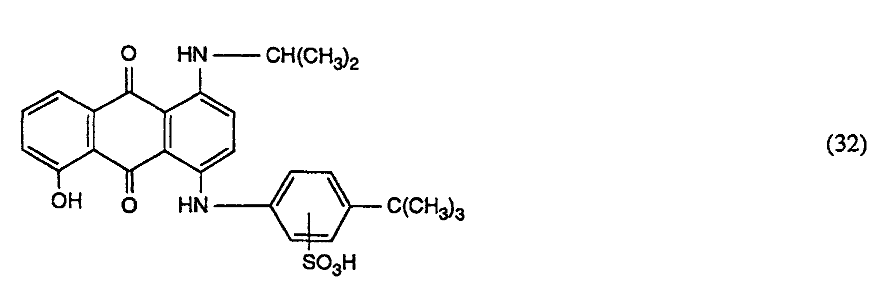 und

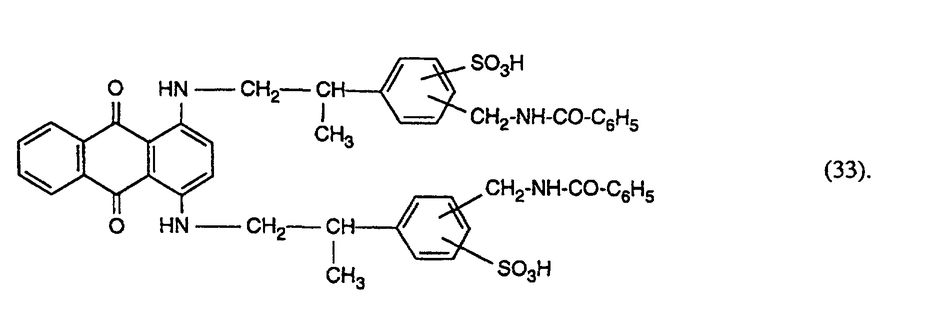

3. Farbstoffmischungen gemäss einem der Ansprüche 1 und 2, **dadurch gekennzeichnet, dass** Ka ein Alkali-, Erdalkali-, Ammonium-, Alkanolammonium- oder Alkylammoniumkation ist.

4. Farbstoffmischungen gemäss einem der Ansprüche 1 bis 3, **dadurch gekennzeichnet, dass** sie mindestens einen 1:2-Chrom- oder 1:2-Kobaltkomplexfarbstoff von zwei gleichen oder zwei voneinander verschiedenen Azoverbindungen aus der Gruppe der Verbindungen der Formeln (9) bis (16) enthalten.

5. Verfahren zum Färben oder Bedrucken von hydroxylgruppenhaltigen oder stickstoffhaltigen Fasermaterialien oder von Leder mit einer Farbstoffmischung, **dadurch gekennzeichnet, dass** man eine Farbstoffmischung gemäss einem der Ansprüche 1 bis 4 verwendet.

6. Verfahren gemäss Anspruch 5, **dadurch gekennzeichnet, dass** man natürliches oder synthetisches Polyamidfasermaterial, insbesondere synthetisches Polyamidfasermaterial, färbt oder bedruckt.

## Claims

1. A dye mixture which comprises at least one 1:2 chromium complex dye of the formula (1) 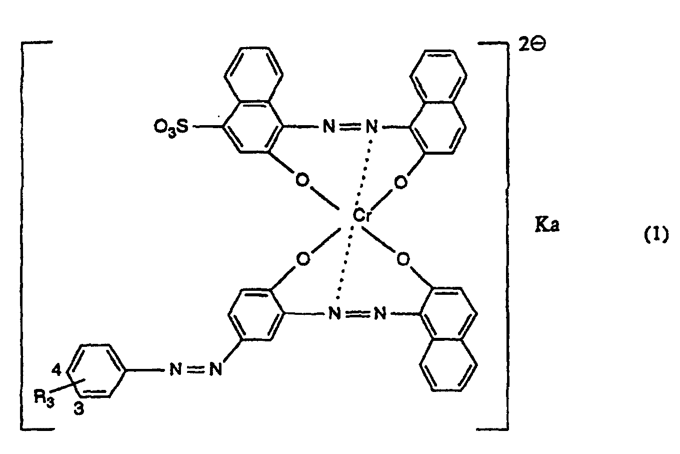 in which
R₃ is a C₁-C₄alkoxy radical attached in the indicated position 4 and Ka is a cation or plurality of cations, together with at least one 1:2 chromium or 1:2 cobalt complex dye of two identical or two different azo compounds from the group consisting of compounds of the formulae 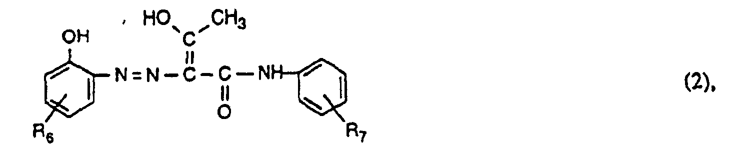 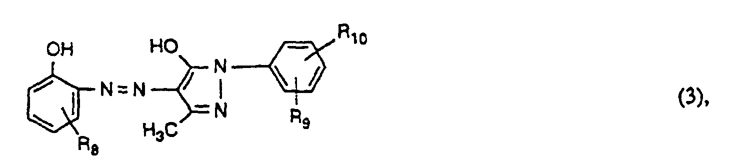 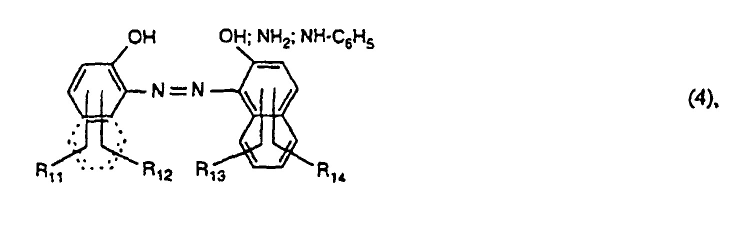 in which
R₆, R₇, R₈, R₉, R₁₀, R₁₁, R₁₂, R₁₃ and R₁₄ independently of one another are hydrogen, C₁-C₄alkyl, C₁-C₄alkoxy, C₂-C₄alkanoylamino, halogen, sulfo, hydroxyl, nitro or sulfamoyl, or N-C₁-C₄alkylsulfamoyl which is unsubstituted or further substituted in the alkyl part by hydroxyl or C₁-C₄alkoxy,
or together with at least one 1:2 cobalt complex dye of the formazan compound of the formula (5) 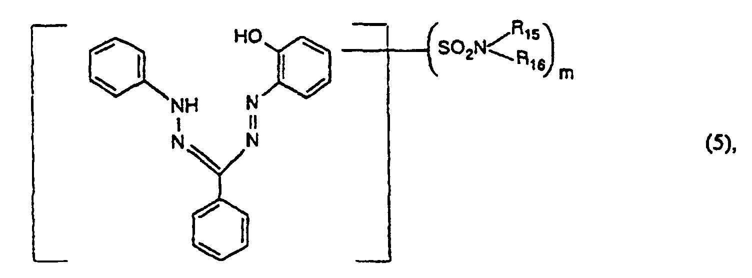 in which
R₁₅ and R₁₆ independently of one another are hydrogen or C₁-C₄alkyl which is unsubstituted or substituted by hydroxyl or C₁-C₄alkoxy,
m is the number 1, 2 or 3 and
the phenyl radicals of the compound of the formula (5) contain no further substituents or are further substituted by C₁-C₄alkyl, C₁-C₄alkoxy, C₂-C₄alkanoylamino, C₁-C₄alkylsulfonyl, C₁-C₄hydroxyalkylsulfonyl, halogen, sulfo, hydroxyl, carboxyl or nitro,
or together with at least one anthraquinone dye from the group of the compounds of the formulae 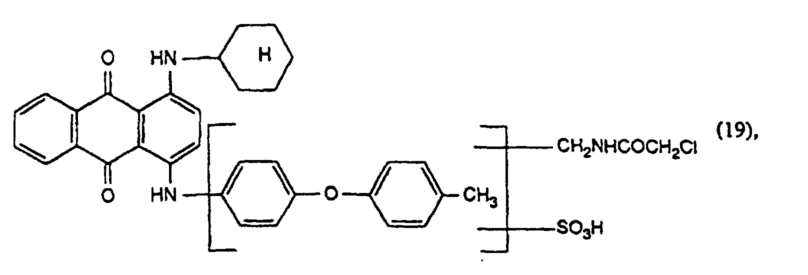 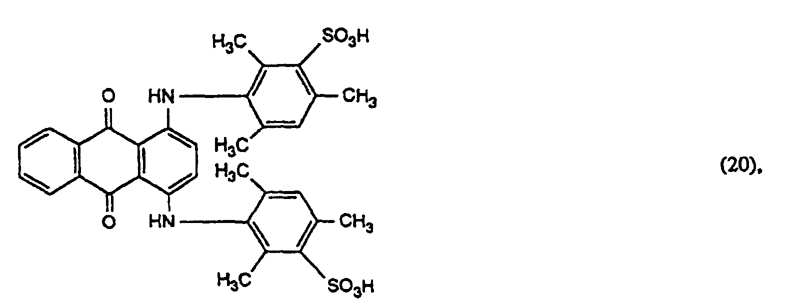 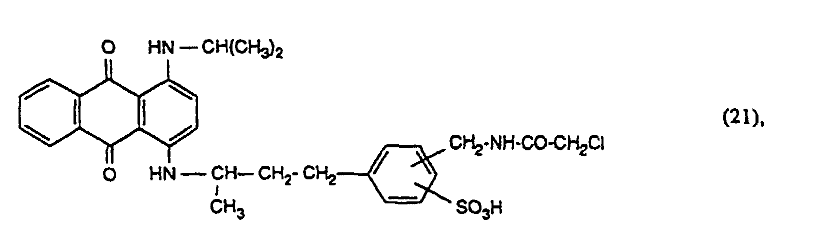 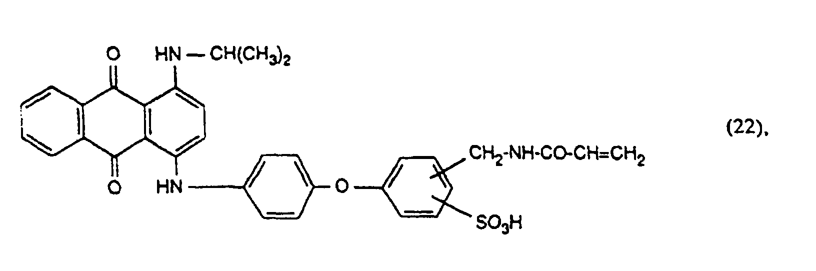 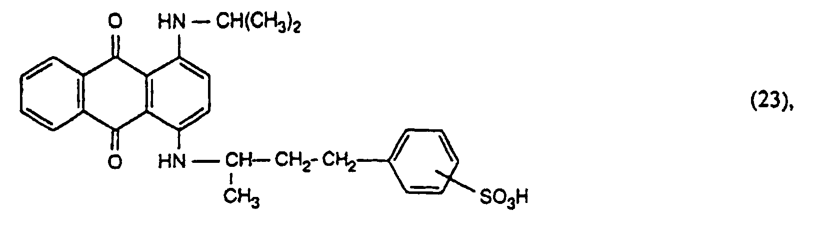 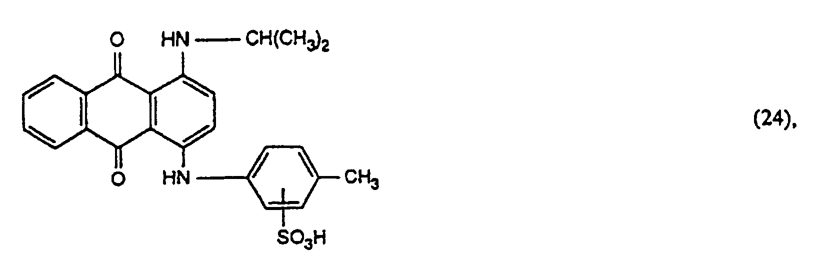 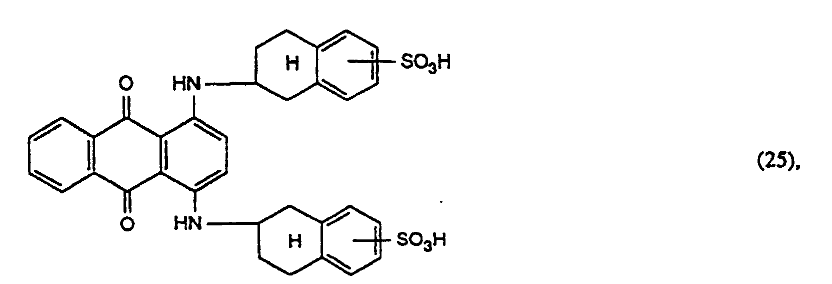 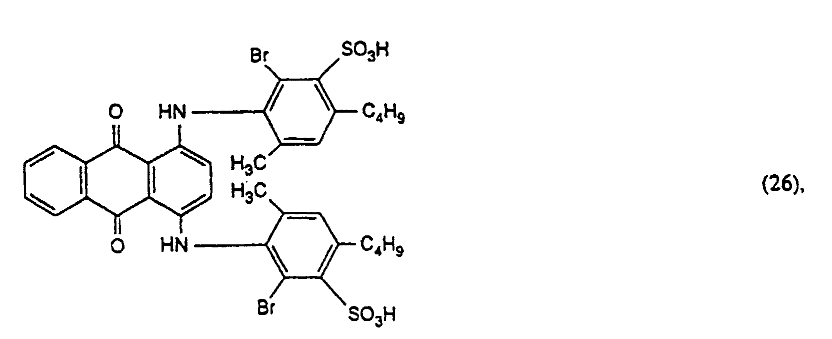 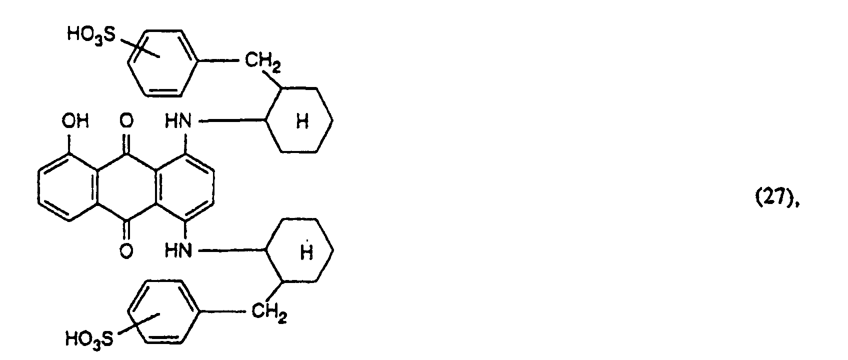 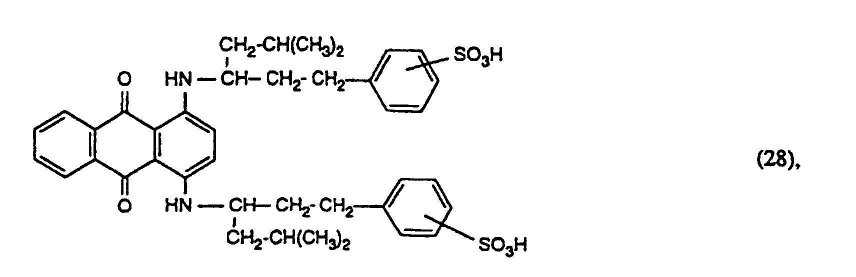 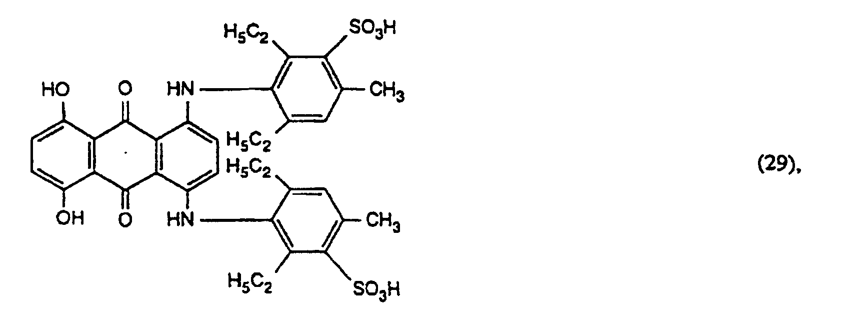 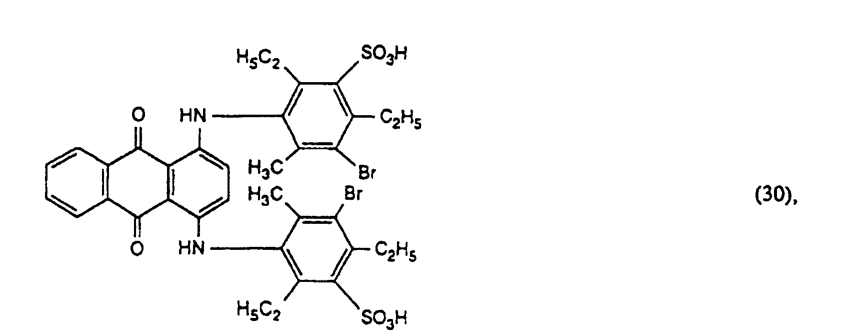 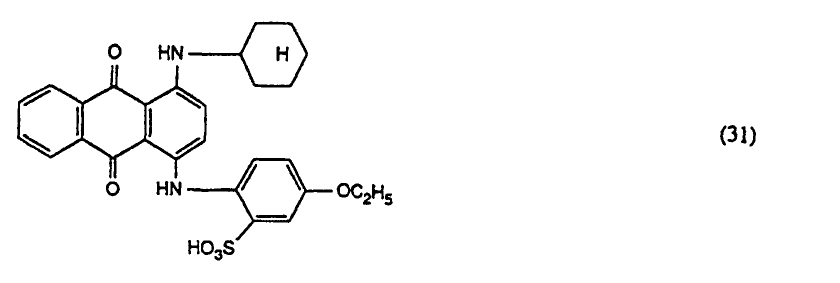 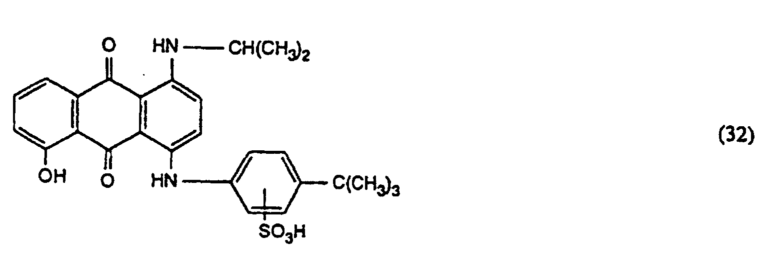 and

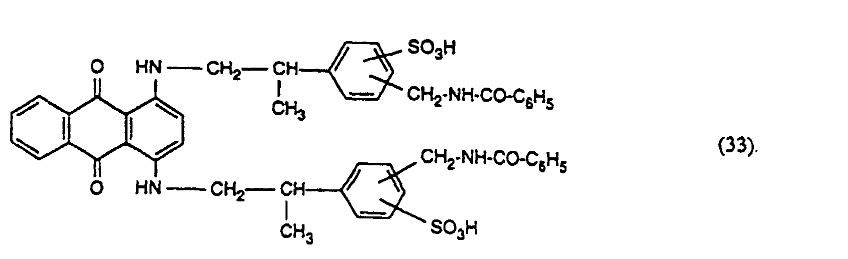

2. A dye mixture which comprises at least one 1:2 chromium complex dye of the formula (1) 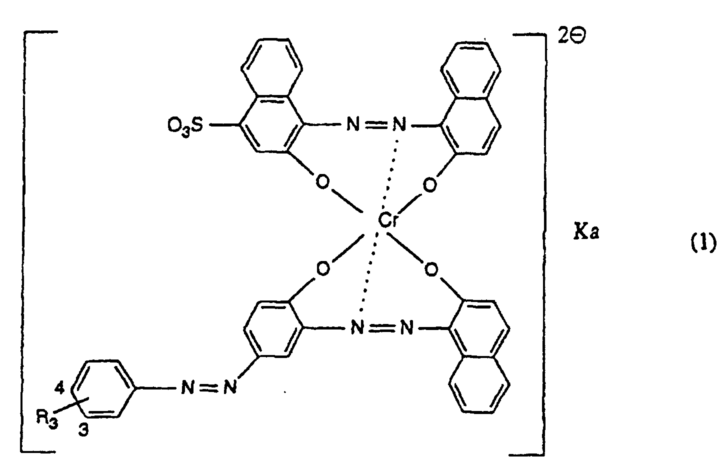 in which
R₃ is a C₁-C₄alkoxy radical attached in the indicated position 4 and Ka is a cation or plurality of cations, together with at least one 1:2 chromium or 1:2 cobalt complex dye of two identical or two different azo compounds from the group consisting of compounds of the formulae 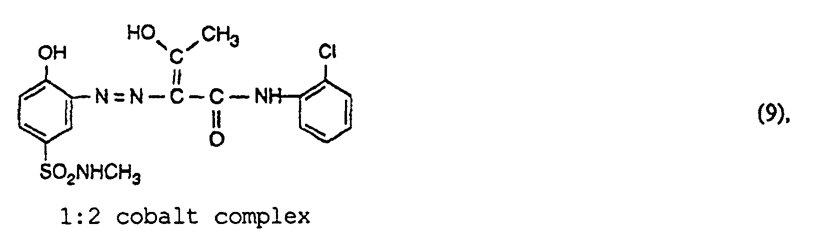 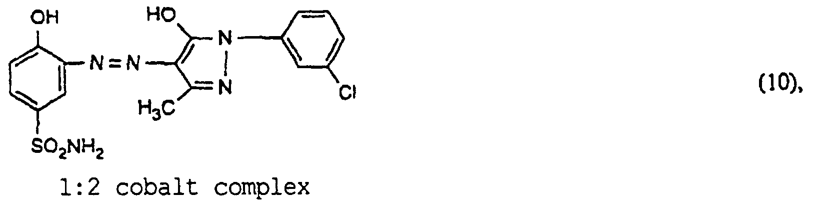 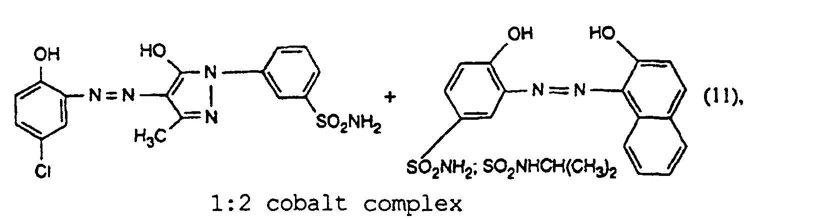 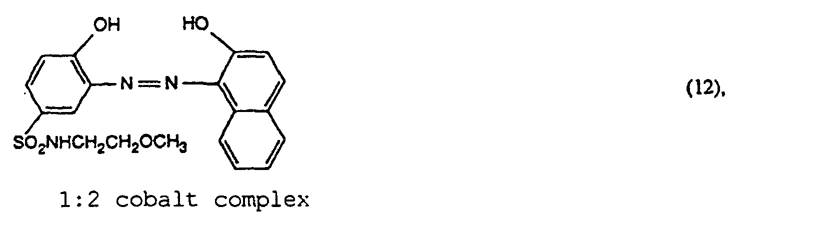 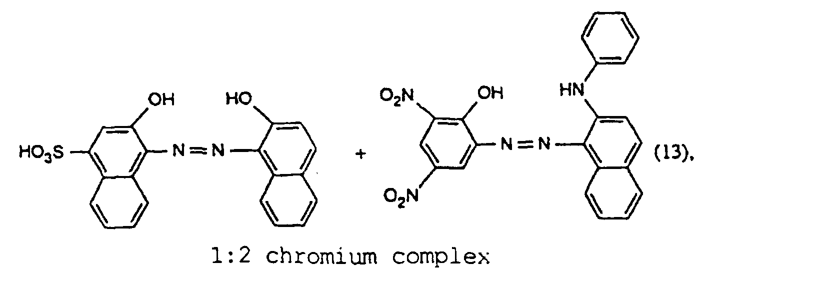 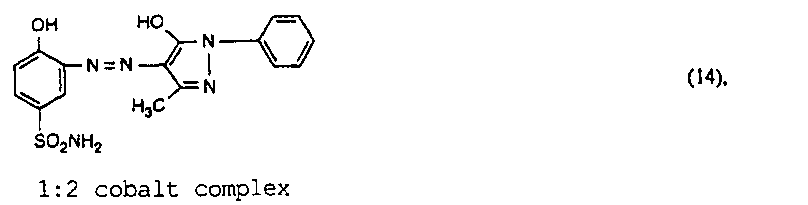 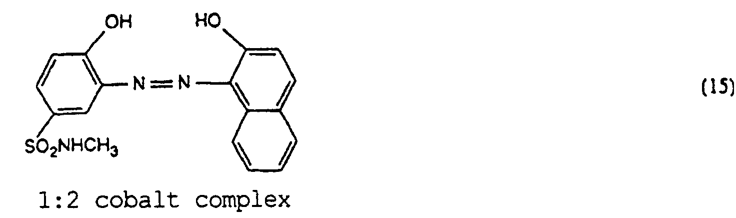 and 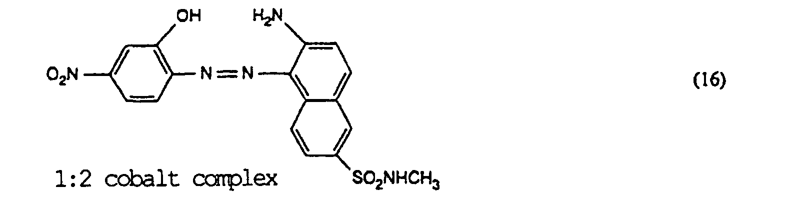 or together with at least one 1:2 cobalt complex dye of the formazan compound of the formula (5) 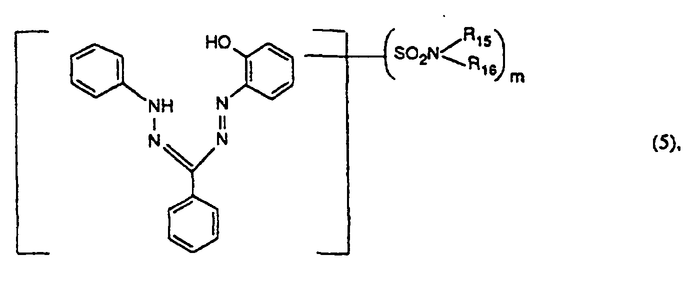 in which
R₁₅ and R₁₆ independently of one another are hydrogen or C₁-C₄alkyl which is unsubstituted or substituted by hydroxyl or C₁-C₄alkoxy,
m is the number 1, 2 or 3 and
the phenyl radicals of the compound of the formula (5) contain no further substituents or are further substituted by C₁-C₄alkyl, C₁-C₄alkoxy, C₂-C₄alkanoylaminc, C₁-C₄alkylsulfonyl, C₁-C₄hydroxyalkylsulfonyl, halogen, sulfo, hydroxyl, carboxyl or nitro,
or together with at least one anthraquinone dye from the group of the compounds of the formulae 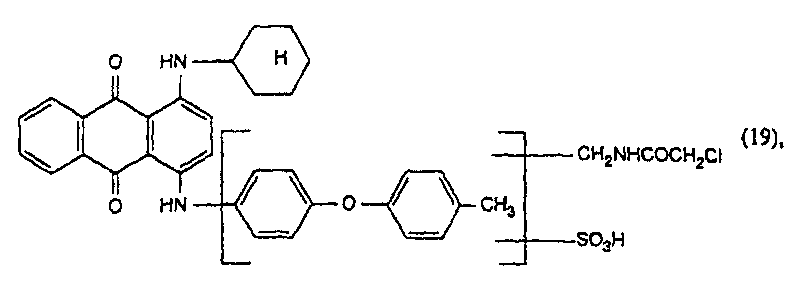 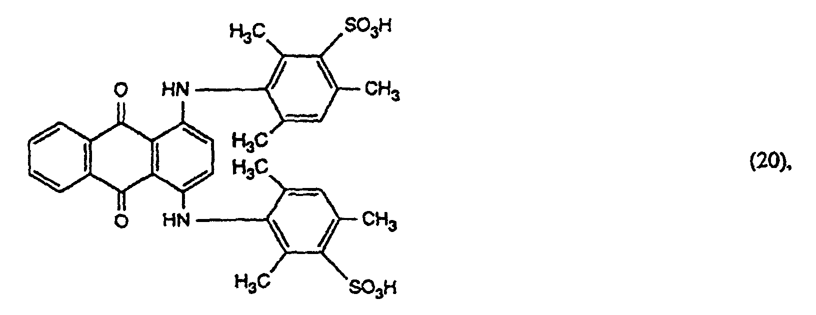 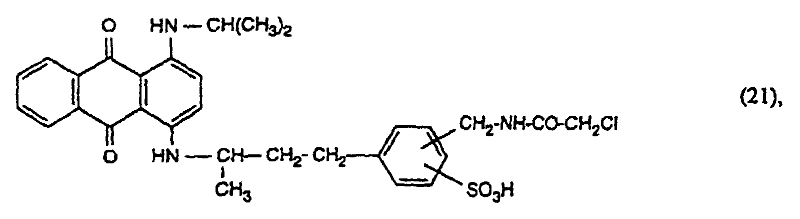 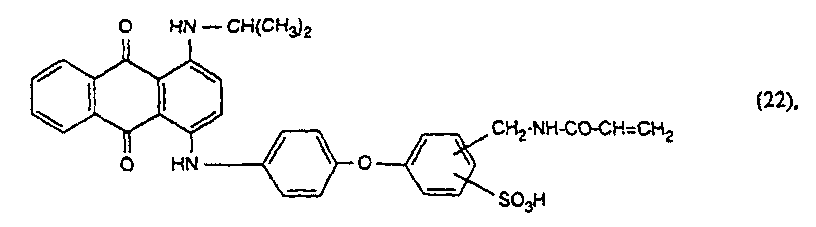 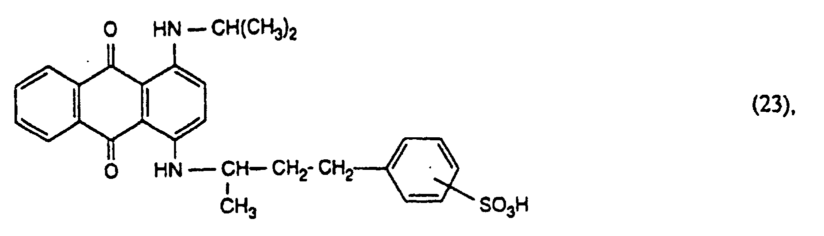 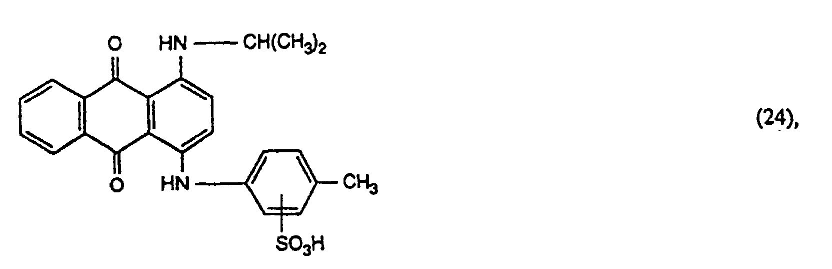 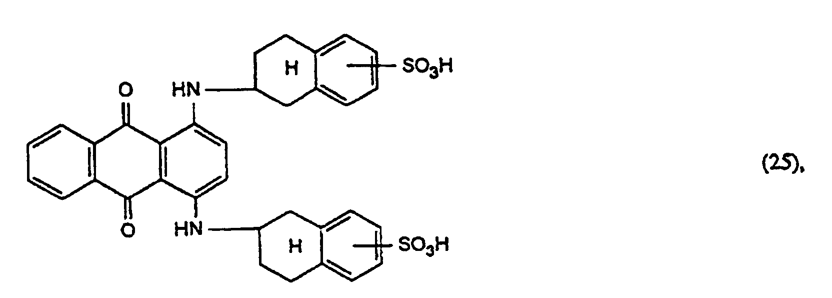 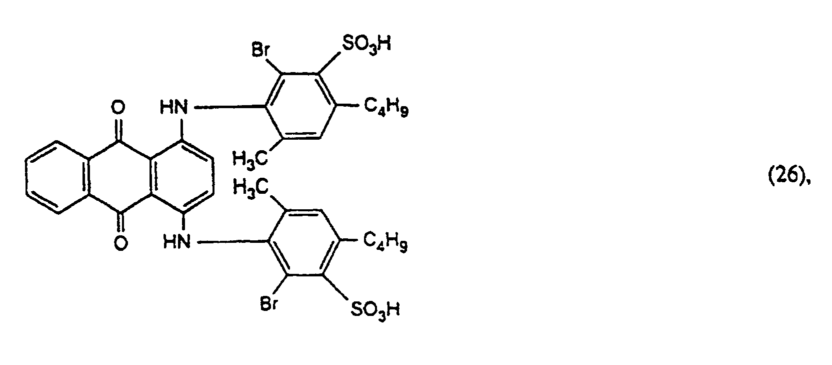 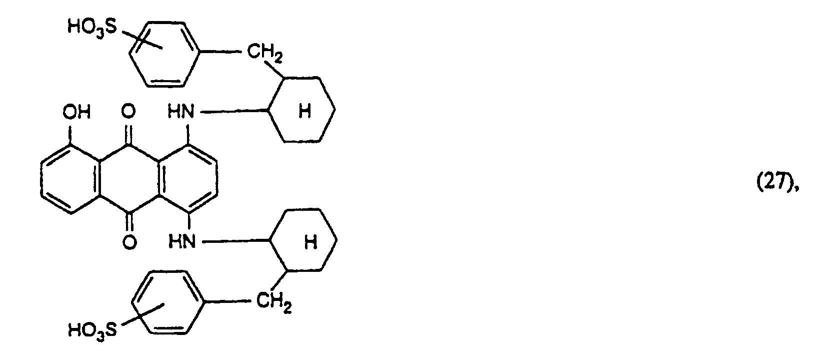 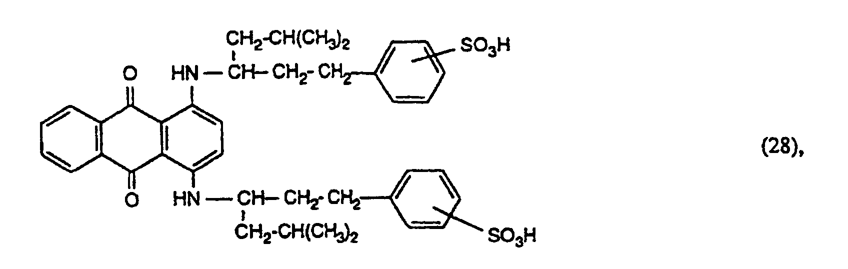 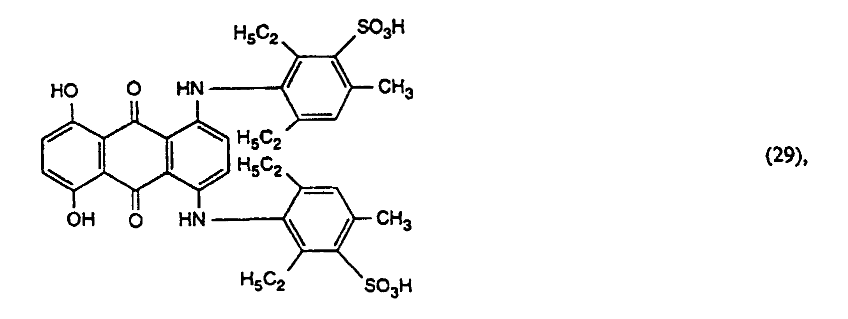 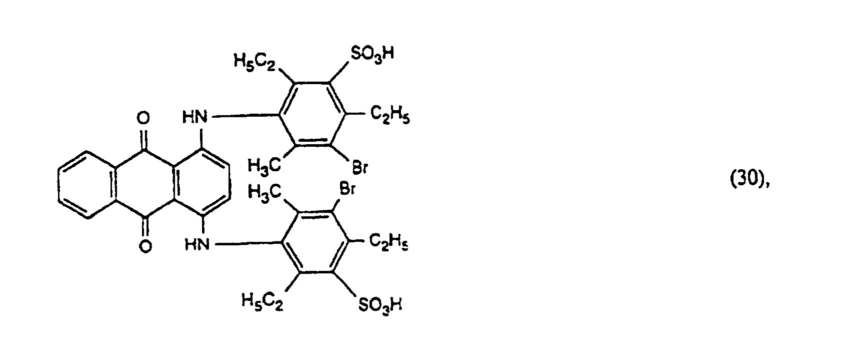 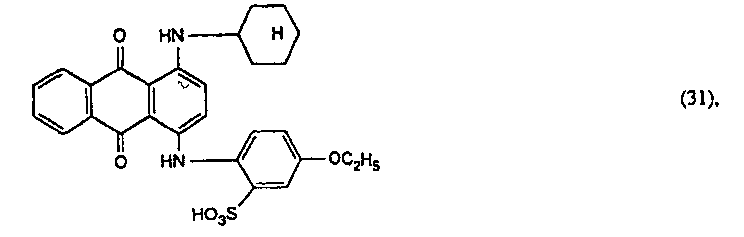 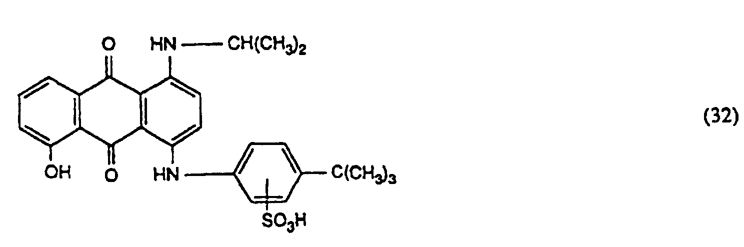 and

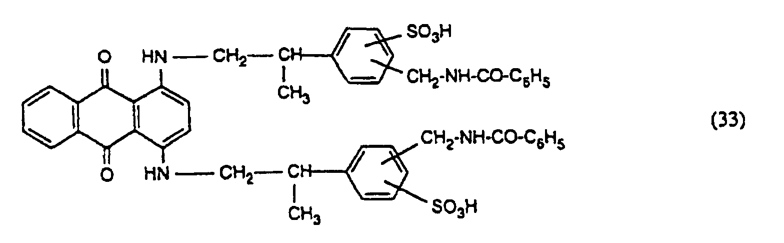

3. A dye mixture according to either of claims 1 and 2, wherein Ka is an alkali metal, alkaline earth metal, ammonium, alkanolammonium or alkylammonium cation.

4. A dye mixture according to any of claims 1 to 3, comprising at least one 1:2 chromium or 1:2 cobalt complex dye of two identical or two different azo compounds from the group consisting of compounds of the formulae (9) to (16).

5. A method of dyeing or printing hydroxyl-containing or nitrogen-containing fibre materials or leather with a dye mixture, which comprises using a dye mixture as claimed in any of claims 1 to 4.

6. A method according to claim 5, wherein natural or synthetic polyamide fibre material, especially synthetic polyamide fibre material, is dyed or printed.

## Revendications

1. Mélanges de colorants **caractérisés en ce qu'**ils contiennent au moins un colorant complexe de chrome 1:2 de formule (1) 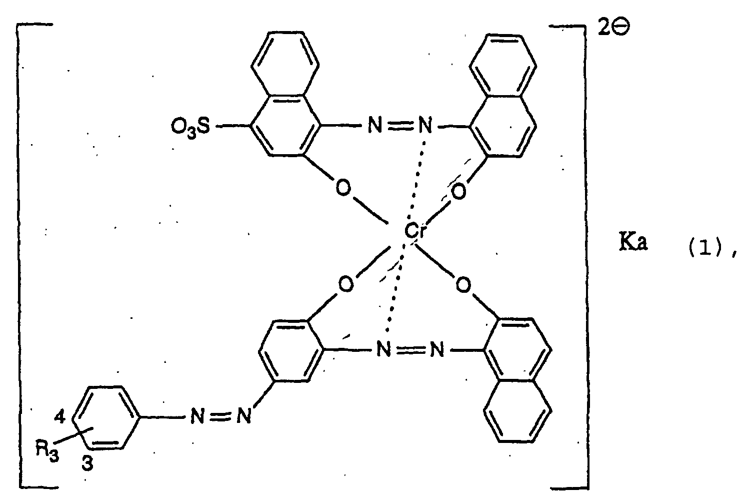 où R₃ représente un reste alkoxy en C₁-C₄ lié à la position 4 indiquée et Ka représente un ou plusieurs cations, ,
conjointement avec au moins un colorant complexe de chrome 1:2 ou de cobalt 1:2 de deux composés azoïques identiques ou différents l'un de l'autre pris dans le groupe des composés de formules (2), (3) et (4) 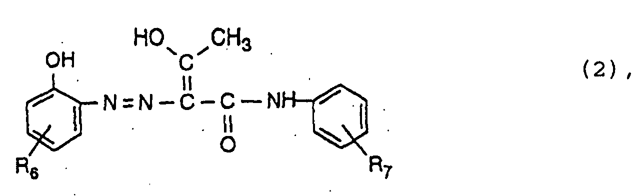 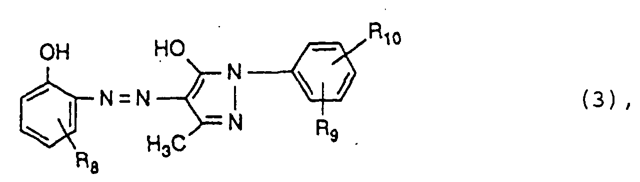 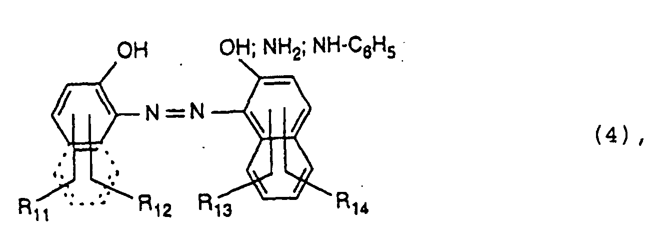 où R₆, R₇, R₈, R₉, R₁₀, R₁₁, R₁₂, R₁₃ et R₁₄ représentent, indépendamment l'un de l'autre, un atome d'hydrogène, des groupes alkyle en C₁-C₄, alkoxy en C₁-C₄, (alcanoyl en C₁-C₄) amino, halogène, sulfo, hydroxyle, nitro, sulfamoyle ou un groupe N-(alkyl en C₁-C₄) sulfamoyle éventuellement substitué encore dans le fragment alkyle par des substituants hydroxyle ou alkoxy en C₁-C₄,
ou représentent conjointement avec au moins un colorant de cobalt. complexe 1:2 du composé de formazane de formule (5) 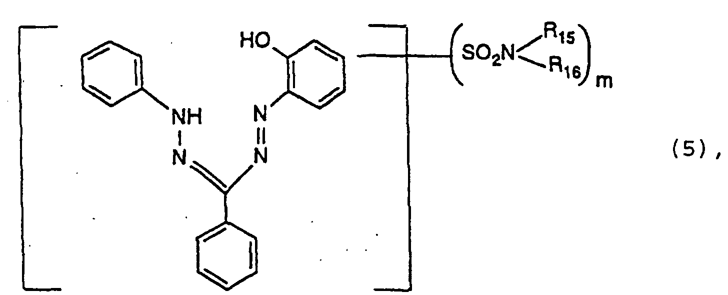 où
R₁₅ et R₁₆ représentent, indépendamment l'un de l'autre, un atome d'hydrogène ou un groupe alkyle en C₁-C₄ substitué par des substituants hydroxyle ou alkoxy en C₁-C₄,
m vaut 1, 2 ou 3 et
les restes phényle du composé de formule (5) ne présentent pas d'autres substituants ou sont substitués davantage par des substituants alkyle en C₁-C₄, alkoxy en C₁-C₄, (alcanoyl en C₁-C₄) amino, (alkyl en C₁-C₄)sulfonyle, hydroxy(alkyl en C₁-C₄)sulfonyle, halogène, sulfo, hydroxyle, carboxyle ou nitro,
ou conjointement avec au moins un colorant d'anthraquinone pris dans le groupe des composés 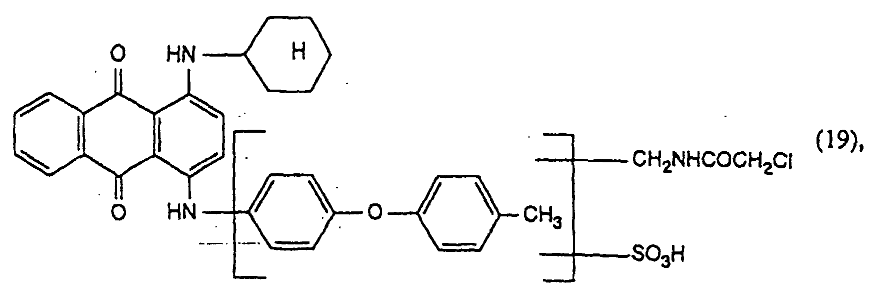 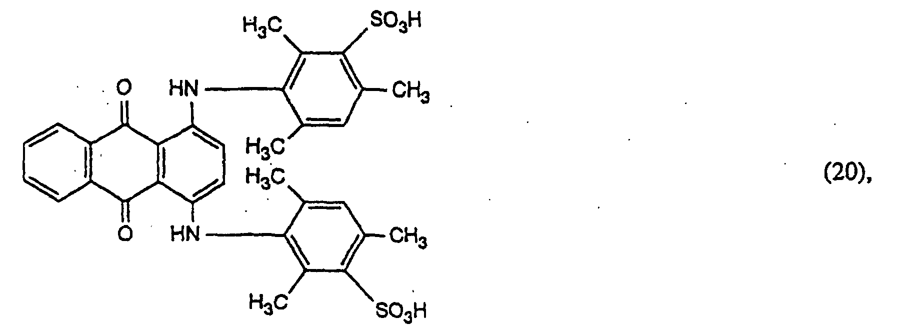 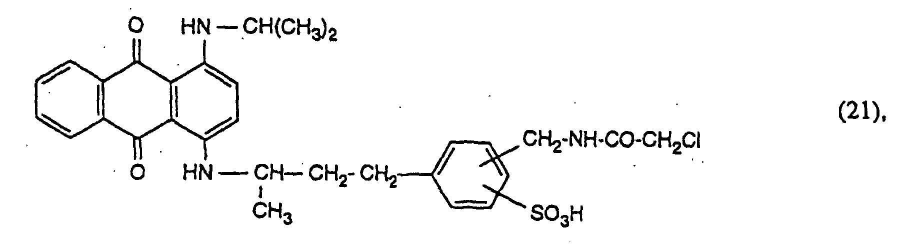 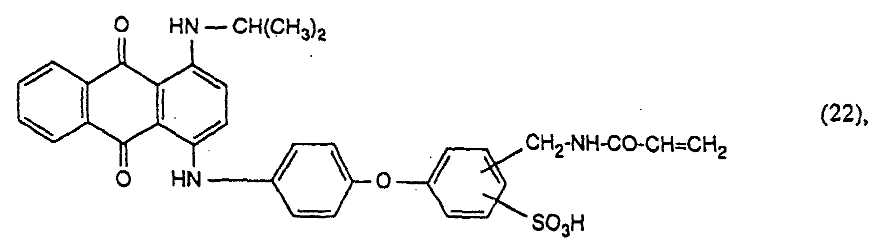 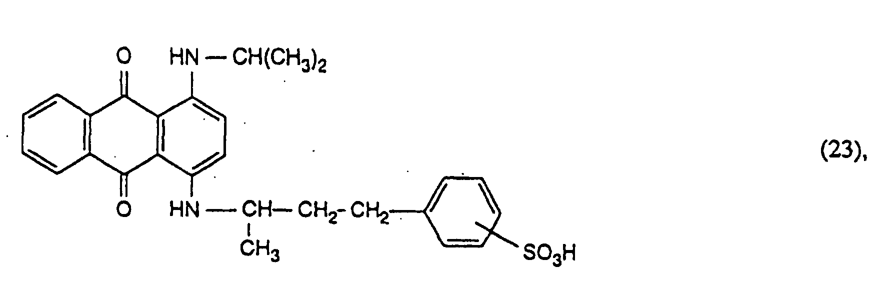 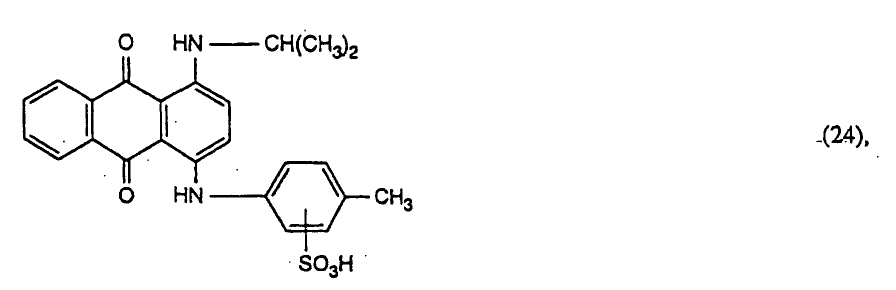 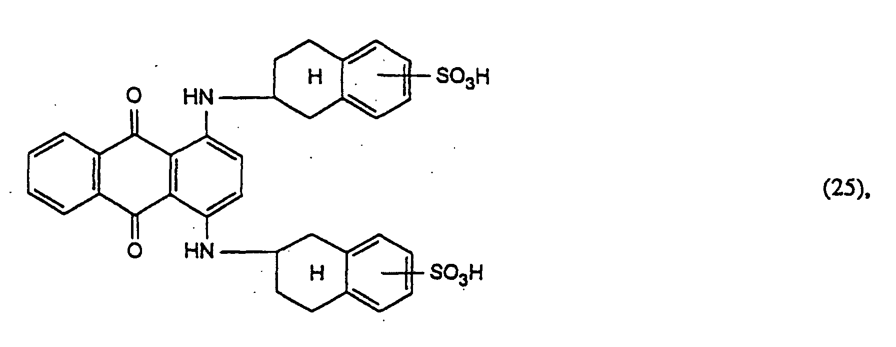 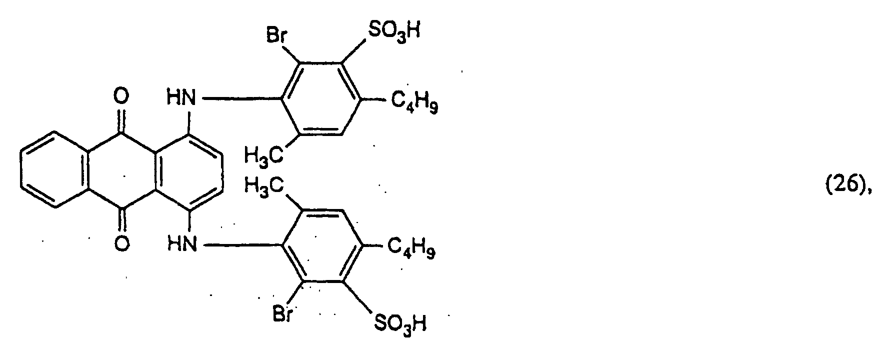 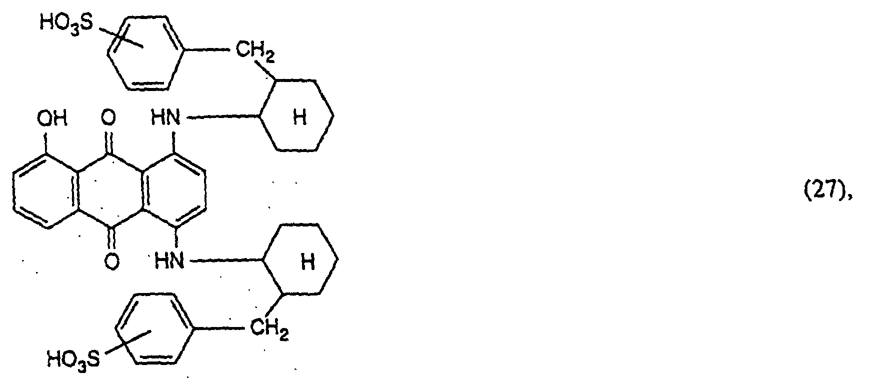 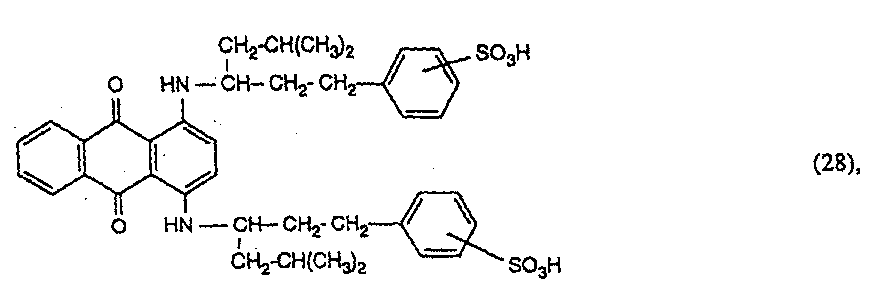 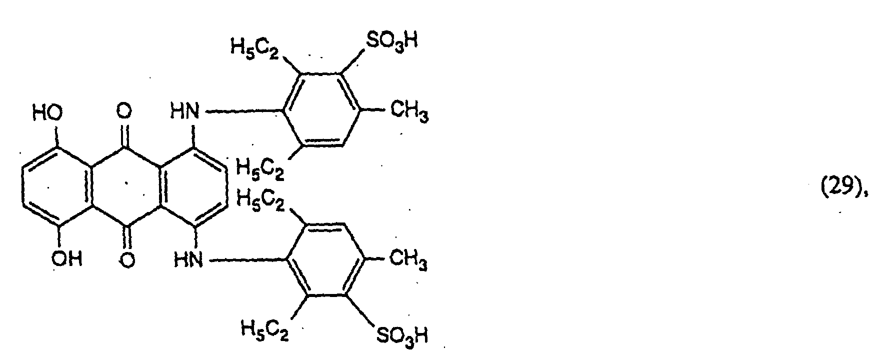 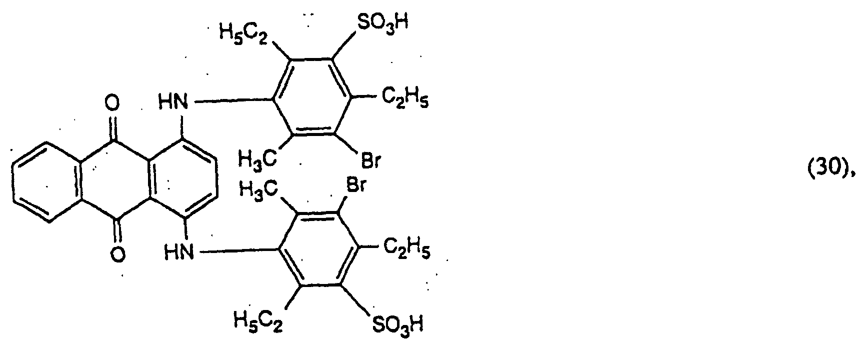 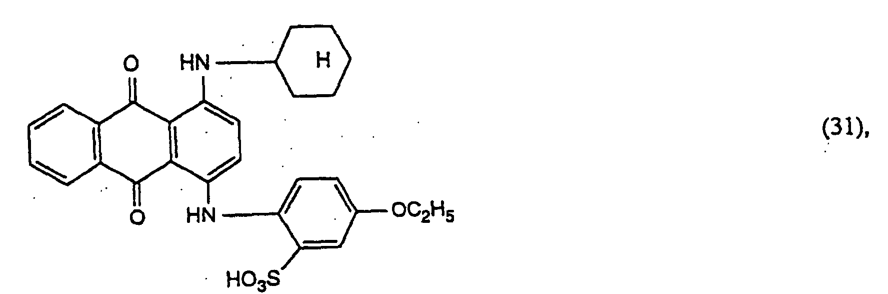 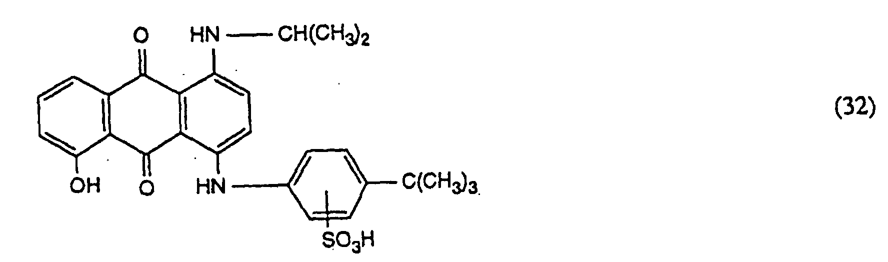 et

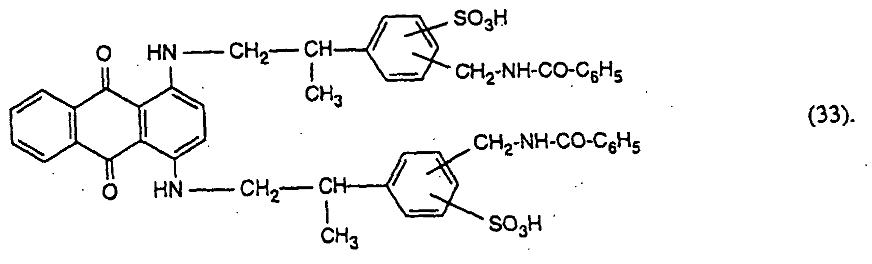

2. Mélanges de colorants **caractérisés en ce qu'**ils contiennent au moins un colorant complexe de chrome 1:2 de formule (1) 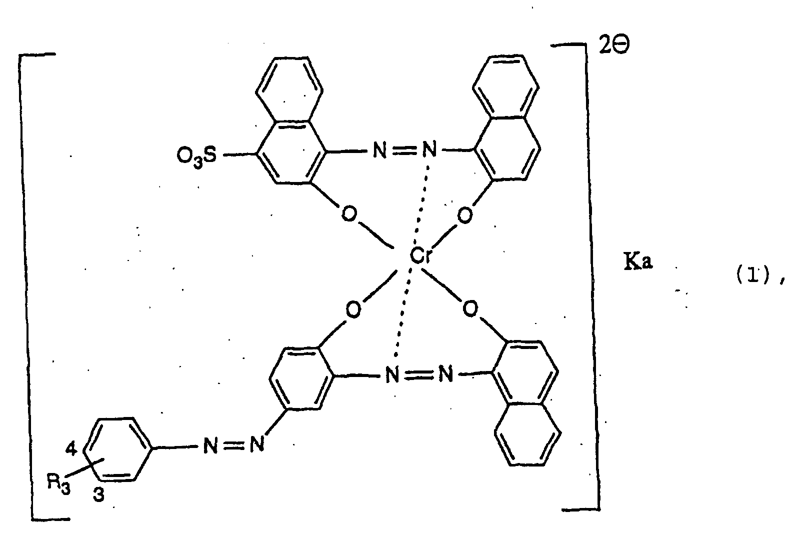 où R₃ représente un reste alkoxy en C₁-C₄ lié à la position 4 indiquée et Ka représente un ou plusieurs cations,
conjointement avec au moins un colorant complexe de chrome 1:2 ou de cobalt 1:2 de deux composés azoïques identiques ou différents l'un de l'autre pris dans le groupe des composés de formules 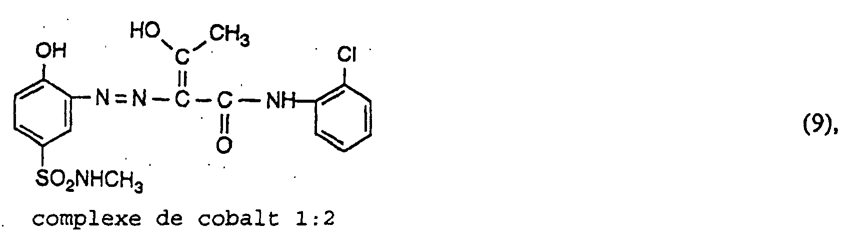 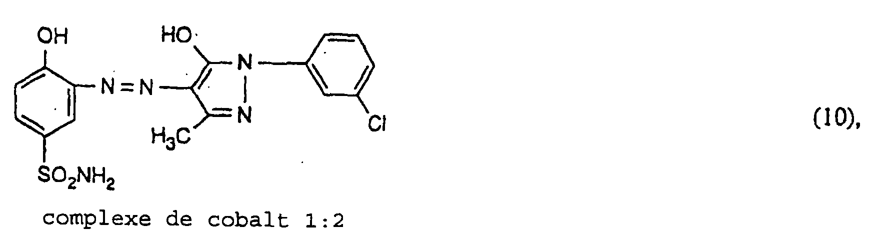 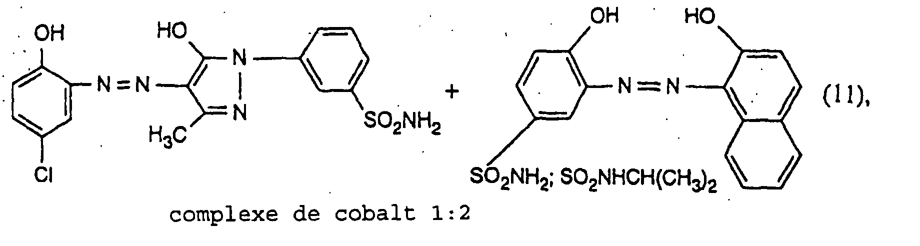 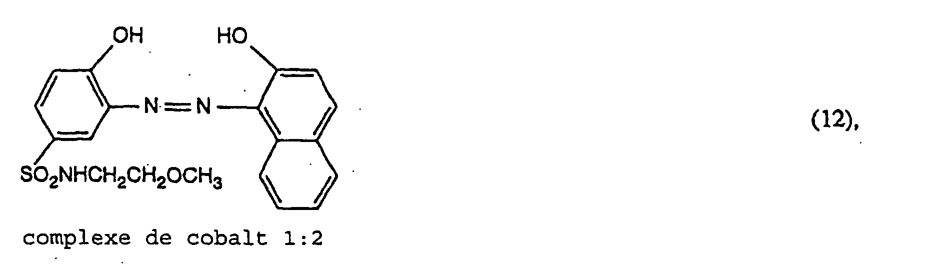 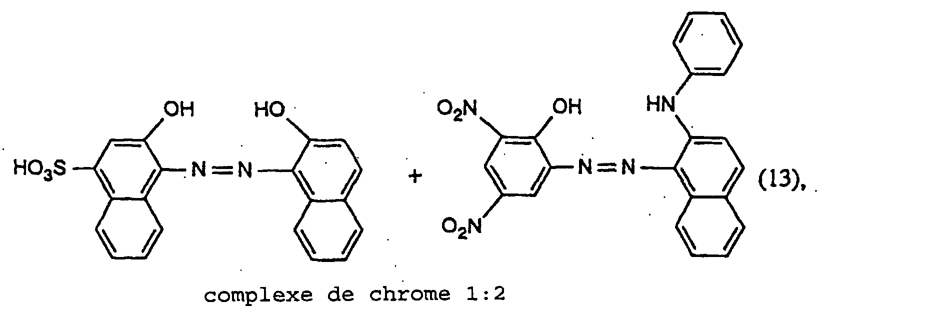 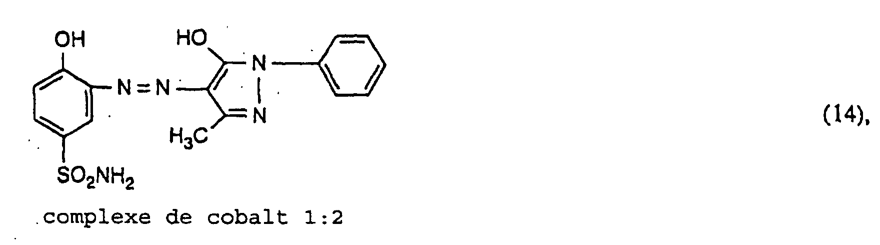 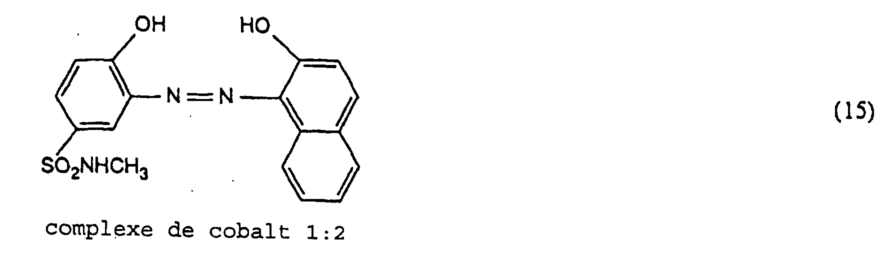 et 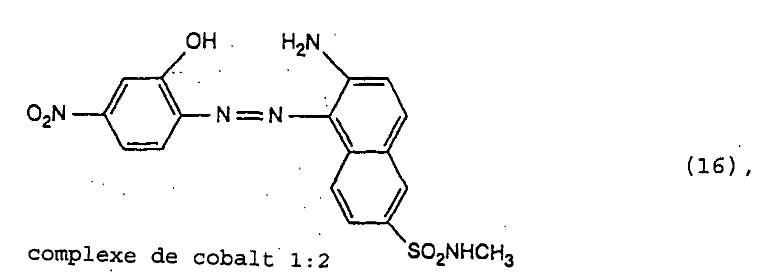 ou conjointement avec au moins un colorant complexe de cobalt 1:2 du composé de formazane de formule (5) 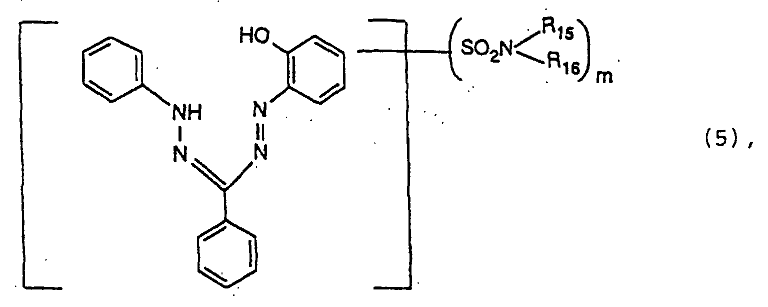 où
R₁₅ et R₁₆ représentent, indépendamment l'un de l'autre, un atome d'hydrogène ou un groupe alkyle en C₁-C₄ substitué par des substituants hydroxyle ou alkoxy en C₁-C₄,
m vaut 1, 2 ou 3 et
les restes phényle du composé de formule (5) ne présentent pas d'autres substituants ou sont substitués davantage par des substituants alkyle en C₁-C₄, alkoxy en C₁-C₄, (alcanoyl en C₁-C₄)amino, (alkyl en C₁-C₄)sulfonyle, hydroxy(alkyl en C₁-C₄)sulfonyle, halogène, sulfo, hydroxyle, carboxyle ou nitro,
ou conjointement avec au moins un colorant d'anthraquinone pris dans le groupe des composés 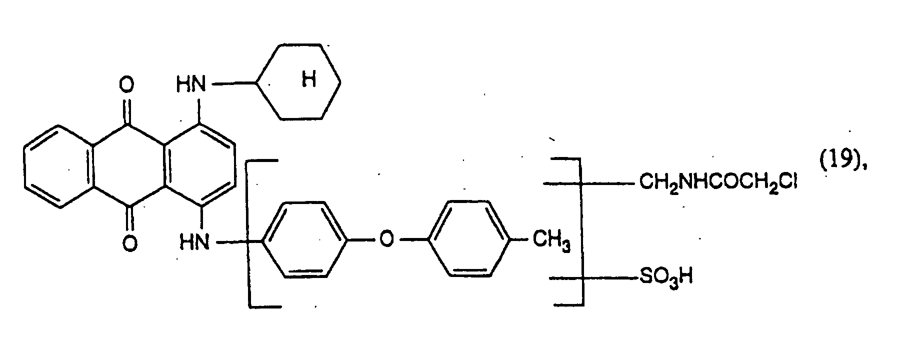 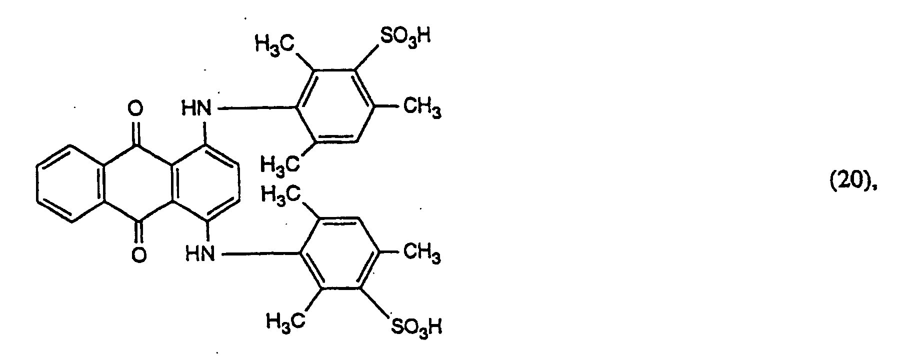 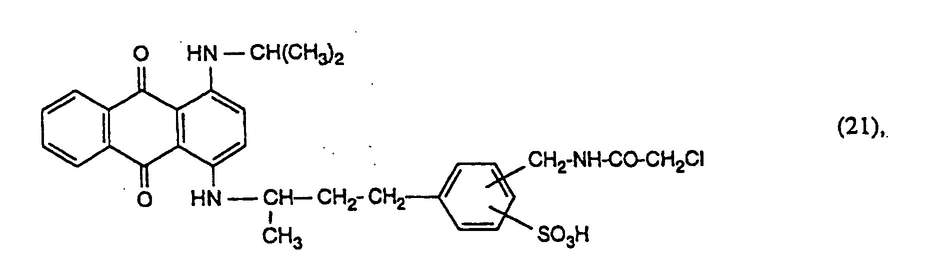 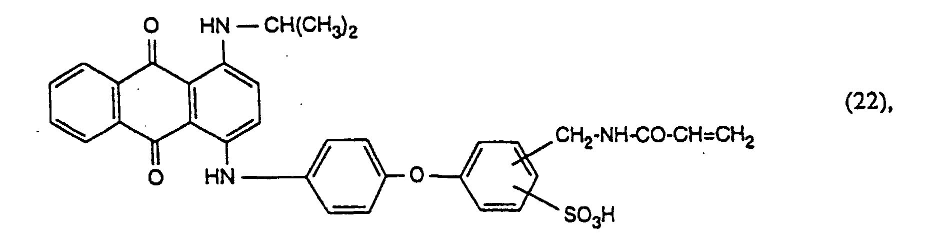 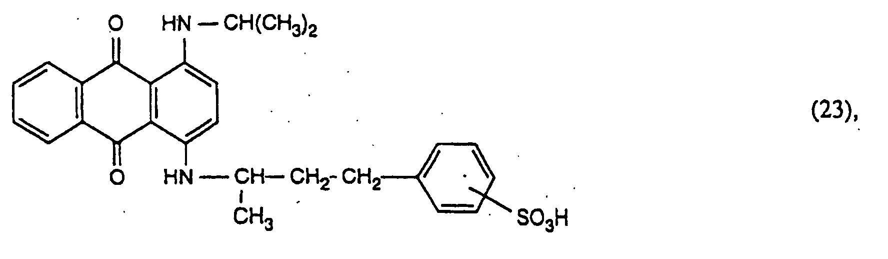 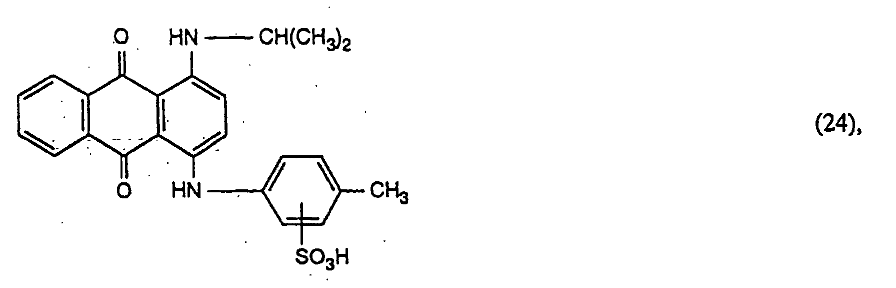 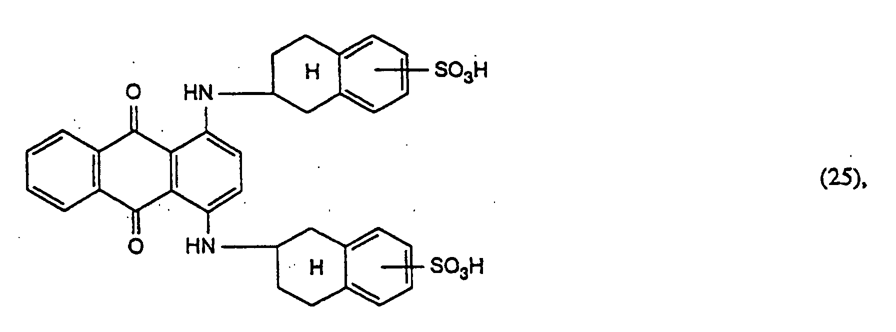 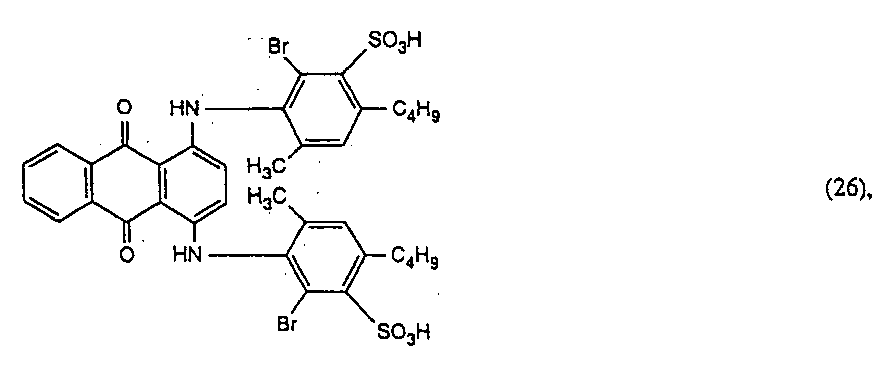 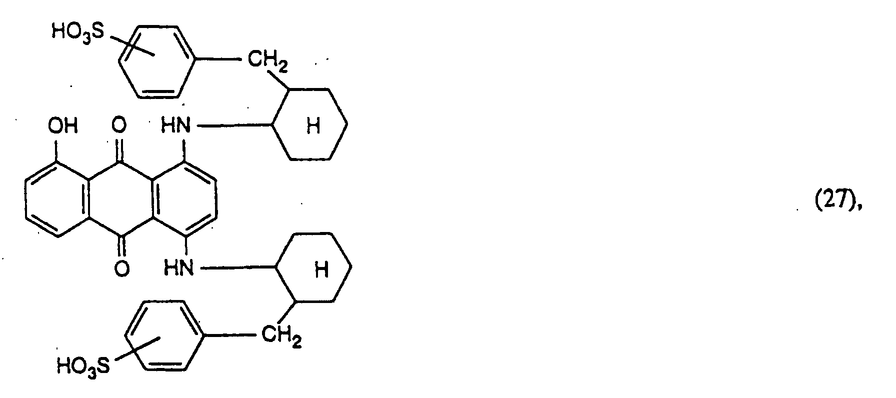 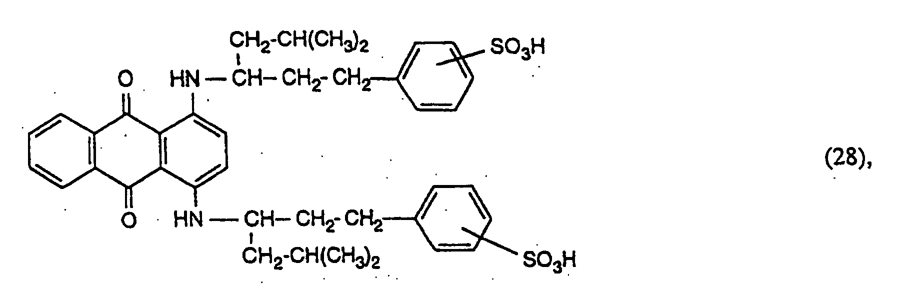 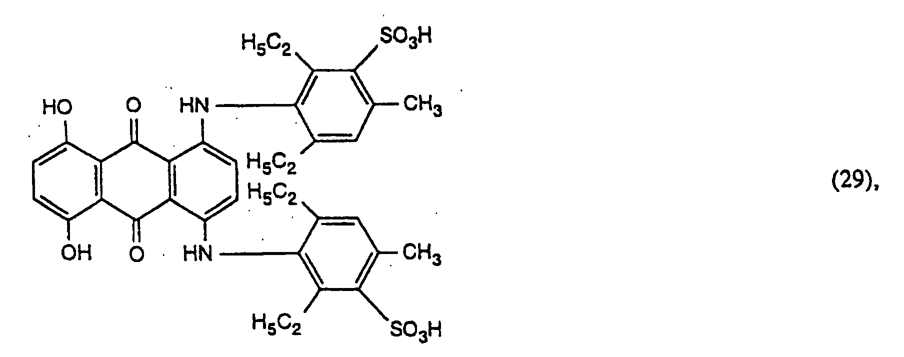 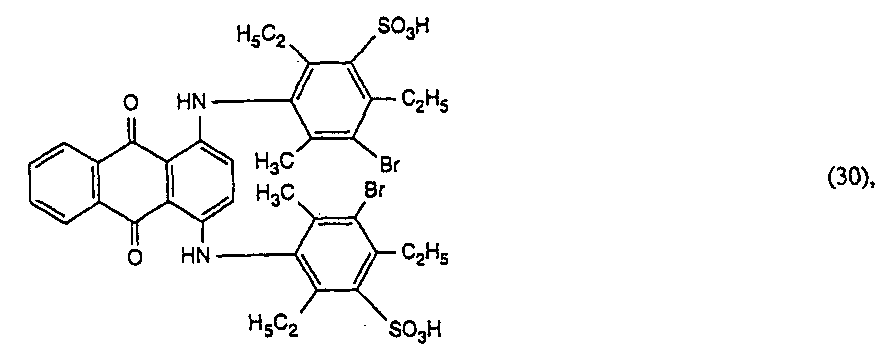 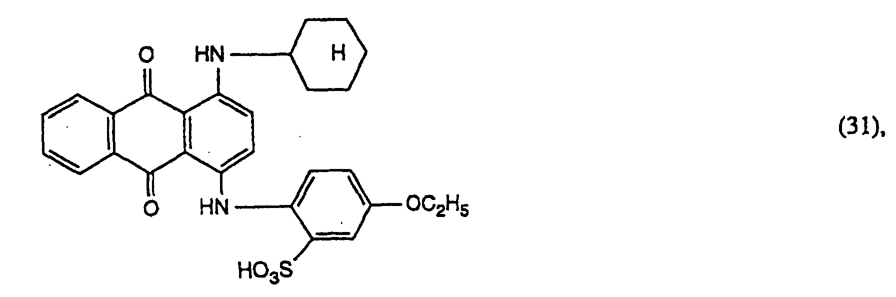 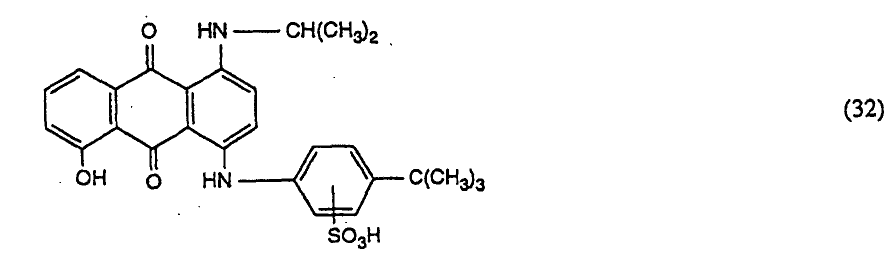 et

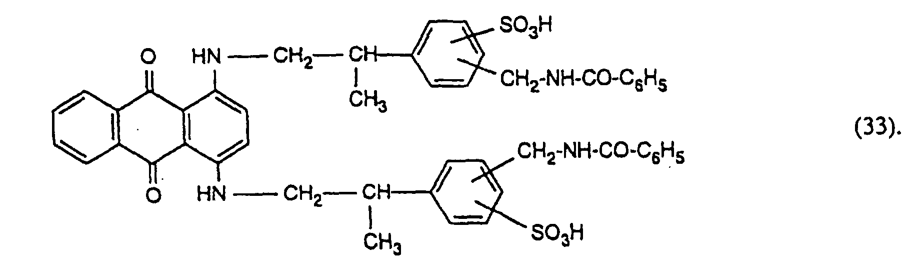

3. Mélanges de colorants selon l'une des revendications 1 et 2, **caractérisés en ce que** Ka représente un cation alcalin, alcalino-terreux, ammonium, alcanolammonium ou alkylammonium.

4. Mélanges de colorants selon l'une des revendications 1 à 3, **caractérisés en ce qu'**ils contiennent au moins un colorant complexe de chrome 1:2 ou de cobalt 1:2 de deux composés azoïques identiques ou différents pris dans le groupe des composés de formules (9) à (16).

5. Procédé pour la teinture ou l'impression de matières fibreuses azotées ou contenant des groupes hydroxyle ou de cuir, à l'aide d'un mélange de colorants, **caractérisé en ce qu'**on utilise un mélange de colorants selon l'une des revendications 1 à 4.

6. Procédé selon la revendication 5, **caractérisé en ce qu'**on teint ou imprime une matière fibreuse polyamide naturelle ou synthétique, en particulier une matière fibreuse synthétique.
